(19) Europäisches Patentamt
European Patent Office
Office européen des brevets

(11) **EP 4 518 385 A1**

(12) **EUROPEAN PATENT APPLICATION**
published in accordance with Art. 153(4) EPC

(43) Date of publication:
**05.03.2025 Bulletin 2025/10**

(21) Application number: **23794705.6**

(22) Date of filing: **17.02.2023**

(51) International Patent Classification (IPC):
**H04W 8/24** (2009.01)   **H04W 72/04** (2023.01)

(52) Cooperative Patent Classification (CPC):
**H04B 7/0658; G06F 9/50; H04W 8/24; H04W 72/04**

(86) International application number:
**PCT/CN2023/076735**

(87) International publication number:
**WO 2023/207269 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.04.2022 PCT/CN2022/090496**
**30.09.2022 PCT/CN2022/123565**

(71) Applicant: **FUJITSU LIMITED**
**Kawasaki-shi, Kanagawa 211-8588 (JP)**

(72) Inventors:
 • **WANG, Xin**
  **Beijing 100022 (CN)**
 • **SUN, Gang**
  **Beijing 100022 (CN)**
 • **JIA, Meiyi**
  **Beijing 100022 (CN)**
 • **ZHANG, Qun**
  **Beijing 100022 (CN)**
 • **SHAN, Yujia**
  **Beijing 100022 (CN)**

(74) Representative: **Haseltine Lake Kempner LLP**
**Cheapside House**
**138 Cheapside**
**London EC2V 6BJ (GB)**

(54) **INFORMATION TRANSMISSION METHOD AND APPARATUS**

(57)    Embodiments of the present application provide an information transmission method and apparatus. The method includes: a terminal equipment receives a capability query request of AI/ML transmitted by a network device, and the terminal equipment feeds back a capability query response or report to the network device according to the capability query request.

201

a terminal equipment receives a capability query request of AI/ML transmitted by a network device

202

the terminal equipment feeds back a capability query response or report to the network device according to the capability query request

**FIG. 2**

EP 4 518 385 A1

**Description**

TECHNICAL FIELD

Embodiments of the present application relate to the technical field of communication.

BACKGROUND

As low-frequency bands spectrum resources become scarce, a millimeter-wave frequency band is capable of providing a greater bandwidth and becomes an important frequency band for a 5G New Radio (NR) system. Millimeter wave has different propagation characteristics from traditional low-frequency bands due to its shorter wavelength, such as a higher propagation loss, poor reflection and diffraction performance, etc. Therefore, a larger-scale array of antennas may be usually used to form a shaped beam with a greater gain, which overcomes propagation losses and ensures system coverage.

With development of Artificial Intelligence (AI) and Machine Learning (ML) technologies, applying the AI/ML technologies to radio communication becomes a current technical direction, so as to solve the difficulties of traditional methods. Applying AI/ML models in radio communication systems, particularly in transmission of air interfaces, is a new technology in 5G-Advanced and 6G stages.

For example, in terms of reporting channel state information (CSI), an Auto-encoder network in deep learning is used at a terminal equipment side, the CSI is encoded/compressed using an AI encoder, and the CSI is decoded/decompressed using an AI decoder at a network device side, which may reduce feedback overhead. For another example, in terms of beam management, using AI/ML models to predict spatially optimal beam pairs according to a result of a small number of beam measurements may reduce a load and delay of a system.

It should be noted that the above introduction to the technical background is just to facilitate a clear and complete description of the technical solutions of the present application, and is elaborated to facilitate the understanding of persons skilled in the art. It cannot be considered that said technical solutions are known by persons skilled in the art just because these solutions are elaborated in the background of the present application.

SUMMARY OF INVENTION

However, the inventor finds that as AI/ML models trained according to data sets, how to adapt to demands for various wireless applications and how to cope with the ever-changing mobile communication environments bring great challenges to AI/ML schemes themselves. For rich wireless communication scenarios, such as suburbs, urban areas, indoors, factories, mines, etc., it is difficult for off-line trained AI/ML models to ensure to keep consistent performance in various circumstances. Therefore, it is necessary to monitor the performance of AI/ML model running and stop using an AI/ML model when necessary.

For at least one of the above problems, the embodiments of the present application provide an information transmission method and apparatus.

According to one aspect of the embodiments of the present application, an information transmission method is provided, including:

a terminal equipment receives a capability query request of AI/ML transmitted by a network device; and
the terminal equipment feeds back a capability query response or report to the network device according to the capability query request.

According to another aspect of the embodiments of the present application, an information transmission apparatus is provided, including:

a receiving unit configured to receive a capability query request of AI/ML transmitted by a network device; and
a transmitting unit configured to feed back a capability query response or report to the network device according to the capability query request.

According to another aspect of the embodiments of the present application, an information transmission method is provided, including:

a network device transmits a capability query request of AI/ML to a terminal equipment; and
the network device receives a capability query response or report fed back by the terminal equipment according to the capability query request.

According to another aspect of the embodiments of the present application, an information transmission apparatus is provided, including:

a transmitting unit configured to transmit a capability query request of AI/ML to a terminal equipment; and
a receiving unit configured to receive a capability query response or report fed back by the terminal equipment according to the capability query request.

According to a further aspect of the embodiments of the present application, a communication system is provided, including:

a terminal equipment configured to receive a capability query request of AI/ML, and feed back a capability query response or report according to the capability query request; and
a network device configured to transmit the capability query request of AI/ML, and receive the capability query response or report.

One of advantageous effects of the embodiments of the present application lies in: a terminal equipment receives a capability query request of AI/ML transmitted by a network device, and feeds back a capability query response or report to the network device according to the capability query request. Thereby, AI/ML model running may be monitored, consistency of the AI/ML model running may be maintained, and robustness of the model running may be improved.

Referring to the later description and drawings, specific implementations of the present application are disclosed in detail, indicating a mode that the principle of the present application may be adopted. It should be understood that the implementations of the present application are not limited in terms of a scope. Within the scope of the terms of the attached claims, the implementations of the present application include many changes, modifications and equivalents.

Features that are described and/or shown for one implementation may be used in the same way or in a similar way in one or more other implementations, may be combined with or replace features in the other implementations.

It should be emphasized that the term "comprise/include" when being used herein refers to presence of a feature, a whole piece, a step or a component, but does not exclude presence or addition of one or more other features, whole pieces, steps or components.

BRIEF DESCRIPTION OF DRAWINGS

An element and a feature described in a drawing or an implementation of the embodiments of the present application may be combined with an element and a feature shown in one or more other drawings or implementations. In addition, in the drawings, similar labels represent corresponding components in several drawings and may be used to indicate corresponding components used in more than one implementation.

FIG. 1 is a schematic diagram of a communication system in the embodiments of the present application;
FIG. 2 is a schematic diagram of an information transmission method in the embodiments of the present application;
FIG. 3 is a schematic diagram of information transmission in the embodiments of the present application;
FIG. 4 is another schematic diagram of information transmission in the embodiments of the present application;
FIG. 5 is an example diagram of a terminal equipment in the embodiments of the present application;
FIG. 6 is an example diagram of a network device and a terminal equipment in the embodiments of the present application;
FIG. 7 is another schematic diagram of information transmission in the embodiments of the present application;
FIG. 8 is another schematic diagram of information transmission in the embodiments of the present application;
FIG. 9 is an example diagram of a network device in the embodiments of the present application;
FIG. 10 is an example diagram of a network device and a terminal equipment in the embodiments of the present application;
FIG. 11 is an example diagram of an SRS in the embodiments of the present application;
FIG. 12 is an example diagram of a network device and a terminal equipment in the embodiments of the present application;
FIG. 13 is another schematic diagram of information transmission in the embodiments of the present application;
FIG. 14 is another schematic diagram of information transmission in the embodiments of the present application;
FIG. 15 is a schematic diagram of an information transmission method in the embodiments of the present application;
FIG. 16 is an example diagram of a model identification in the embodiments of the present application;
FIG. 17A is another example diagram of a model identification in the embodiments of the present application;
FIG. 17B is another example diagram of a model identification in the embodiments of the present application;
FIG. 17C is a schematic diagram of model identification interaction in the embodiments of the present application;

FIG. 17D is a schematic diagram of model function interaction in the embodiments of the present application;

FIG. 17E is another schematic diagram of model function interaction in the embodiments of the present application;

FIG. 17F is a schematic diagram of AI/ML report in the embodiments of the present application;

FIG. 18 is a schematic diagram of a method for transmitting a reference signal in the embodiments of the present application;

FIG. 19 is a schematic diagram of a method for receiving a reference signal in the embodiments of the present application;

FIG. 20 is a schematic diagram of an information transmission apparatus in the embodiments of the present application;

FIG. 21 is a schematic diagram of an information transmission apparatus in the embodiments of the present application;

FIG. 22 is a schematic diagram of a network device in the embodiments of the present application;

FIG. 23 is a schematic diagram of a terminal equipment in the embodiments of the present application.

## DETAILED DESCRIPTION

Referring to the drawings, through the following Specification, the aforementioned and other features of the present application will become obvious. The specification and the drawings specifically disclose particular implementations of the present application, showing partial implementations which may adopt the principle of the present application. It should be understood that the present application is not limited to the described implementations, on the contrary, the present application includes all the modifications, variations and equivalents falling within the scope of the attached claims.

In the embodiments of the present application, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "contain", "include", "comprise" and "have", etc. refer to the presence of stated features, elements, members or components, but do not preclude the presence or addition of one or more other features, elements, members or components.

In the embodiments of the present application, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present application, the term "communication network" or "wireless communication network" may refer to a network that meets any of the following communication standards, such as Long Term Evolution (LTE), LTE- Advanced (LTE-A), Wideband Code Division Multiple Access (WCDMA), High-Speed Packet Access (HSPA) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, and 5G, New Radio (NR), future 6G and so on, and/or other communication protocols that are currently known or will be developed in the future.

In the embodiments of the present application, the term "network device" refers to, for example, a device that accesses a terminal equipment in a communication system to a communication network and provides services to the terminal equipment. The network device may include but be not limited to the following devices: a base station (BS), an access point (AP), a transmission reception point (TRP), a broadcast transmitter, a mobile management entity (MME), a gateway, a server, a radio network controller (RNC), a base station controller (BSC) and so on.

The base station may include but be not limited to: a node B (NodeB or NB), an evolution node B (eNodeB or eNB) and a 5G base station (gNB), etc., and may further includes a remote radio head (RRH), a remote radio unit (RRU), a relay or a low-power node (such as femeto, pico, etc.). And the term "BS" may include their some or all functions, each BS may provide communication coverage to a specific geographic region. The term "cell" may refer to a BS and/or its coverage area, which depends on the context in which this term is used.

In the embodiments of the present application, the term "user equipment (UE)" or "terminal equipment (TE) or terminal device" refers to, for example, a device that accesses a communication network through a network device and receives network services. The terminal equipment may be fixed or movable, and may also be referred to as mobile station (MS), a terminal, a subscriber station (SS), an access terminal (AT) and a station and so on.

The terminal equipment may include but be not limited to the following devices: a cellular phone, a personal digital assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or an apparatus for monitoring or measurement, for example may include but be not limited to: a machine type communication (MTC) terminal, a vehicle-mounted communication terminal, a device to device (D2D) terminal, a machine to machine (M2M) terminal and so on.

Moreover, the term "network side" or "network device side" refers to a side of a network, may be a base station, or may include one or more network devices as described above. The term "user side" or "terminal side" or "terminal equipment side" refers to a side of a user or terminal, may be a UE, or may include one or more terminal equipments as described above. If it is not specifically mentioned herein, "device" may refer to a network device, or may refer to a terminal equipment.

The scenarios of the embodiments of the present application are described through the following examples, however the present application is not limited to these.

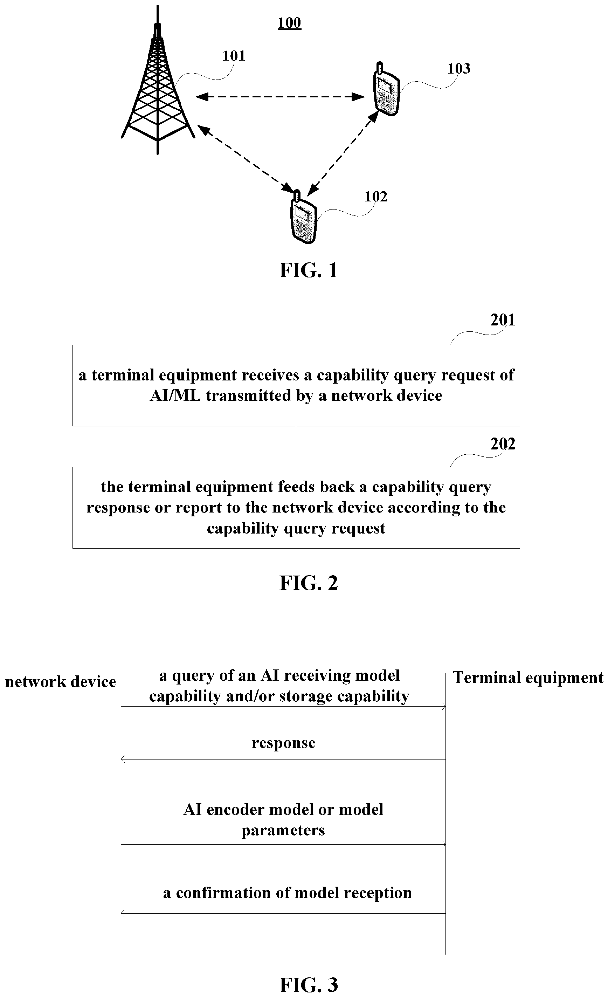

FIG. 1 is a schematic diagram of a communication system in the embodiments of the present application, schematically describes situations by taking a terminal equipment and a network device as examples, as shown in FIG. 1, a communication system 100 may include a network device 101 and terminal equipments 102, 103. For simplicity, FIG. 1 only takes two terminal equipments and one network device as examples for description, however the embodiments of the present application are not limited to this.

In the embodiments of the present application, transmission of existing or further implementable services may be carried out between the network device 101 and the terminal equipments 102, 103. For example, these services may include but be not limited to: enhanced Mobile Broadband (eMBB), massive Machine Type Communication (mMTC), Ultra-Reliable and Low-Latency Communication (URLLC) and so on.

It is worth noting that FIG. 1 shows that two terminal equipments 102 and 103 are within the coverage of network device 101, but the present application is not limited to this. The two terminal equipments 102 and 103 may be outside the coverage of the network device 101, or one terminal equipment 102 may be within the coverage of the network device 101 and the other terminal equipment 103 may be outside the coverage of the network device 101.

In the embodiments of the present application, high layer signaling may be e.g. radio resource control (RRC) signaling; for example, is called an RRC message, for example includes an MIB, system information, and a dedicated RRC message; or is called an RRC information element (RRC IE). The high layer signaling, for example, may further be Medium Access Control (MAC) signaling; or called a MAC control element (MAC CE). However, the present application is not limited to these.

In the embodiments of the present application, one or more AI/ML models may be configured and run in a network device and/or a terminal equipment. The AI/ML model may be used for various signal processing functions of wireless communication, such as CSI estimation and reporting, beam management and beam prediction, etc.; the present application is not limited to this.

The inventor finds that for example, for an AI encoder and decoder, an AI network deployed for the first time comes from offline training. If AI performance is not good, start and stop on both sides need to be consistent. In addition, the AI network needs to be updated in order to adapt to an application environment, this brings a very big challenge, because such paired AI networks are deployed at a network device side and a terminal equipment side, and cannot be trained together to complete update of the AI network.

Embodiments of first aspect

The embodiments of the present application provide an information transmission method, which will be described from a terminal equipment side.

FIG. 2 is a schematic diagram of an information transmission method in the embodiments of the present application, as shown in FIG. 2, the method includes:

201, a terminal equipment receives a capability query request of AI/ML transmitted by a network device; and
202, the terminal equipment feeds back a capability query response or report to the network device according to the capability query request.

It should be noted that the above FIG. 2 is only schematic description of the embodiments of the present application, but the present application is not limited to this. For example, an execution step of each operation may be adjusted appropriately, moreover other some operations may be added or reduced. Persons skilled in the art may make appropriate modifications according to the above contents, not limited to the disclosure of the FIG. 2 above.

In some embodiments, an AI/ML model may be run respectively for different signal processing functions. For example, for an AI/ML model for CSI reporting, there may have different model group identifications, model identifications, and version identifications. For an AI/ML model for beam management, there may have other model group identifications, model identifications, and version identifications.

In some embodiments, the capability query request includes querying at least one of the following:

- an AI/ML capability;
- a signal processing function;
- an AI/ML model group identification;
- an AI/ML model identification;
- a version identification of an AI/ML model;
- an update capability of an AI/ML model;
- a performance monitoring capability or performance evaluation capability of an AI/ML model;
- a training capability of an AI/ML model; or
- a storage capability related to update of an AI/ML model.

In some embodiments, the capability query response or report includes at least one of the following:

- whether an AI/ML capability is supported;
- whether a certain signal processing function is supported;
- whether a queried AI/ML model group identification, or, a supported AI/ML model group identification is supported;
- whether a queried AI/ML model identification, or a supported AI/ML model identification is supported;
- whether a version identification of a queried AI/ML model, or a version identification of a supported AI/ML model is supported;
- whether an update capability of an AI/ML model is supported;
- a performance monitoring capability or performance evaluation capability of an AI/ML model;
- a training capability of an AI/ML model; or
- a storage capability related to update of an AI/ML model.

The above information may include one of them or may also include any combination of at least two pieces of information. In addition, the above text schematically shows contents of the capability query request and the capability query response or report, however the present application is not limited to this, for example it may further include other information related to AI/ML.

For example, the network device and the terminal equipment communicate capabilities of the AI encoder and the AI decoder used for CSI feedbacks related through a capability query process and pair the AI encoder with the AI decoder. The network device transmits an AI capability query message related to reduction of CSI feedback overhead to the terminal equipment, and the terminal equipment reports whether to have an AI/ML capability and gives a corresponding AI encoder index when having the AI/ML capability. After receiving the AI encoder index, the network device will use the corresponding AI decoder for CSI processing.

Thereby, AI/ML-related capability information is exchanged between the network device and the terminal equipment, and AI/ML models between the network device and the terminal equipment may be paired. AI/ML model running may be monitored, consistency of the AI/ML model running may be maintained, and robustness of the model running may be improved.

In some embodiments, the capability query response or report includes an identification of an AI/ML model for the signal processing function supported by the terminal equipment; according to the identification of the AI/ML model supported by the terminal equipment, the network device queries whether there exists an AI/ML model in the network device, whose identification is consistent with the identification of the AI/ML model in the capability query response or report.

For example, after receiving an AI/ML capability query of the network device for a certain function, the terminal equipment performs reporting according to its AI/ML capability, the AI/ML capability including: whether to support AI/ML of the function, whether to have an update capability of an AI/ML model, whether to have a training capability of an AI/ML model, an index corresponding to an AI/ML model, or an index of an AI/ML model group.

After receiving an AI/ML capability report, the network device searches for its own AI/ML model index or AI/ML model group index, and if there is an AI/ML model or AI/ML model group that is consistent with an index in the terminal equipment, the network device responds to the terminal equipment that the AI/ML model or AI/ML model group may be used to perform related operations. If the terminal equipment has the update capability of the AI/ML model, the network device may further transmit an AI/ML model expected by the terminal equipment. If there is no consistent AI/ML model or AI/ML model group, the network device does not enable an AI/ML function.

In some embodiments, the capability query request includes an AI/ML model group identification and/or a model identification and/or a version identification for a certain signal processing function supported by the network device; the terminal equipment queries whether there exist consistent AI/ML model in the terminal equipment according to the AI/ML model group identification and/or the model identification and/or the version identification supported by the network device, and includes positive information of the model group identification and/or the model identification and/or the version identification in the capability query response or report in a case where there exist consistent AI/ML models.

For example, the terminal equipment receives AI/ML capability query of the network device for a certain function, which includes an AI/ML model index expected by the network device, and if the terminal equipment has an AI/ML model corresponding to the index, the terminal equipment gives a positive response, otherwise the terminal equipment gives a negative response.

If the terminal equipment supports AI/ML model update, the terminal equipment may transmit a request for updating the AI/ML model to the network device, and the network device transmits the AI/ML model to the terminal equipment after receiving the request. If the terminal equipment does not have a queried AI/ML capability, the terminal equipment makes a response that it does not support an AI/ML operation corresponding to this function.

In some embodiments, in a case where AI/ML model groups and/or signal processing functions supported by the terminal equipment and the network device are consistent, the terminal equipment receives an intra-group identification and/or a model identification of the AI/ML model group transmitted by the network device.

In some embodiments, the terminal equipment receives configuration information of the network device for a certain signal processing function, the configuration information including an identification of the AI/ML model group and/or the model, and performs the signal processing by using the AI/ML model corresponding to the identification of the AI/ML model group and/or the model.

For example, after the network device receives capability report of the terminal equipment, if the network device queries an AI/ML model group and acquires a positive response from the terminal equipment, or the terminal equipment reports an AI/ML model group index, the network device further determines whether the AI/ML model group supported by the network device is consistent with an AI/ML model group supported by the terminal equipment.

If they are consistent, the network device further configures an intra-group AI/ML identification in the AI/ML model group in the configuration of the signal processing function corresponding to the AI/ML model group, and transmits it to the terminal equipment. The terminal equipment performs relevant signal processing by using a terminal equipment-side AI/ML model that corresponds to the intra-group AI/ML identification, and transmits outputting related information, and the network device performs relevant signal reception and processing by using a network device-side AI model that corresponds to the intra-group AI/ML identification.

In some embodiments, the capability query response or report includes updated capability information and/or an identification of the AI/ML model supported by the terminal equipment, and the terminal equipment receives update information of the AI/ML model transmitted by the network device.

For example, the update information of the AI/ML model includes a parameter or an identification of the AI/ML model, and the terminal equipment selects a corresponding AI/ML model according to the parameter or the identification, or downloads a corresponding AI/ML model from a core network device or the network device.

In some embodiments, the capability query response or report includes capability information on whether the terminal equipment supports training, and/or capability information on whether the terminal equipment supports performance monitoring or performance evaluation indicated by a network device.

In some embodiments, the terminal equipment receives a message for configuring or activating or enabling an AI/ML model transmitted by the network device, and uses a corresponding AI/ML model according to the message.

In some embodiments, the terminal equipment receives a message for de-configuring or deactivating or disabling an AI/ML model transmitted by the network device, and stops a corresponding AI/ML model according to the message.

For example, the network device may determine whether an AI/ML model is working well according to the communication quality, or feedback information (e.g., HARQ ACK/NACK) etc. from the terminal equipment. When working performance is not good, the network device may stop the AI/ML model or switch to other model. The network device may transmit a stop indication directly, or complete a stop or switch operation on the AI/ML model via RRC, MAC CE or DCI.

For example, the network device may enable the terminal equipment to stop an intra-group AI/ML model with a certain AI/ML identification via operations such as de-configuring, deactivating, or disabling, etc. For another example, the network device may indicate an intra-group AI/ML model with a certain AI/ML identification, enable the terminal equipment to start the AI/ML model, or switch to use the AI/ML model via operations such as configuring, activating, or enabling, etc.

In some embodiments, the identification related to the AI/ML model includes at least one of the following: a signal processing function identification, a model group identification, a model identification, a model category identification, a model layer number identification, a model version identification, or a model size or storage size identification.

In some embodiments, the network device and the terminal equipment have AI/ML models with identical identifications, and the AI/ML model of the network device and the AI/ML model of the terminal equipment have been jointly trained.

For example, an AI/ML model of the terminal equipment may be paired with an AI/ML model of the network device, so that a transmitting end AI/ML model and a receiving end AI/ML model belong to jointly trained AI/ML models. Output of the transmitting end AI/ML model serves as input of the receiving end AI/ML model.

The above text schematically describes the situations for AI capability query or AI pairing. The following text then schematically describes the situations for AI release or AI update.

In some embodiments, in a case where the terminal equipment supports update of the AI/ML model and has an available memory, the terminal equipment receives indication information for transmitting the AI/ML model transmitted by the network device, and the terminal equipment receives the AI/ML model according to the indication information.

For example, the network device queries an AI/ML update capability and an AI/ML storage capability of the terminal equipment. After receiving confirmation and capability report from the terminal equipment, the network device initiates a transmission indication of an AI/ML model and prepares to transmit the AI/ML model to the terminal equipment. The terminal equipment gets ready to receive after responding to the transmission indication.

In some embodiments, the received AI/ML model includes identification information related to the AI/ML model, an AI/ML model structure and parameter information, wherein the identification information related to the AI/ML model is transmitted via radio resource control signaling (RRC) or MAC CE, or is transmitted via a data channel, and the AI/ML model structure and the parameter information are transmitted via a data channel.

For example, the AI model transmitted by the network device to the terminal equipment at least contains two parts: the first part is information related to an AI model identification, and the second part is structure and parameter information of the AI model. The first part may be transmitted to the terminal equipment via RRC or MAC CE, etc., or, the first part together with the second part is transmitted to the terminal equipment via a data channel.

In some embodiments, the indication information includes an AI/ML model identification and/or a version identification, and after receiving the AI/ML model, the terminal equipment transmits feedback information to the network device, the feedback information including the AI/ML model identification and/or the version identification.

For example, after receiving the AI model transmitted by the network device, the terminal equipment transmits confirmation information of receiving the model to the network device, which includes identification information of the AI model.

The above text schematically describes examples of paired use of AI/ML models that are jointly trained and deployed in a network device and a terminal equipment respectively. Other communications between the network device and the terminal equipment that may achieve the purpose of model pairing or model release, such as handshake operation, etc., are not given one by one, relevant art may be referred to.

The following text takes CSI feedbacks as an example to schematically describe AI release or AI update.

For example, the network device, for a function of CSI feedback overhead reduction, inquiries an AI reception and update capability of the terminal equipment, and if the terminal equipment has this capability, the network device transmits an AI encoder to the terminal equipment.

In one implementation, the network device transmits a network structure or network parameter or network index of the AI encoder to the terminal equipment. In this way, the terminal equipment may perform CSI compression by using the AI encoder paired with an AI decoder of the network device.

FIG. 3 is a schematic diagram of information transmission in the embodiments of the present application, exemplarily showing a situation in which AI query and AI release are combined. As shown in FIG. 3, the network device may query an AI receiving model capability and/or storage capability from the terminal equipment, and after receiving a response from the terminal equipment, the network device may transmit an AI encoder model or model parameters to the terminal equipment, and the terminal equipment will feedback a confirmation message after successful reception.

In another implementation, the network device transmits an AI model index or a model group ID used for reducing the CSI feedback overhead to the terminal equipment, and the terminal equipment downloads a corresponding AI/ML model or AI/ML model group from a known core network or upper layer. After that, the terminal equipment and the network device confirm an AI encoder that should be used.

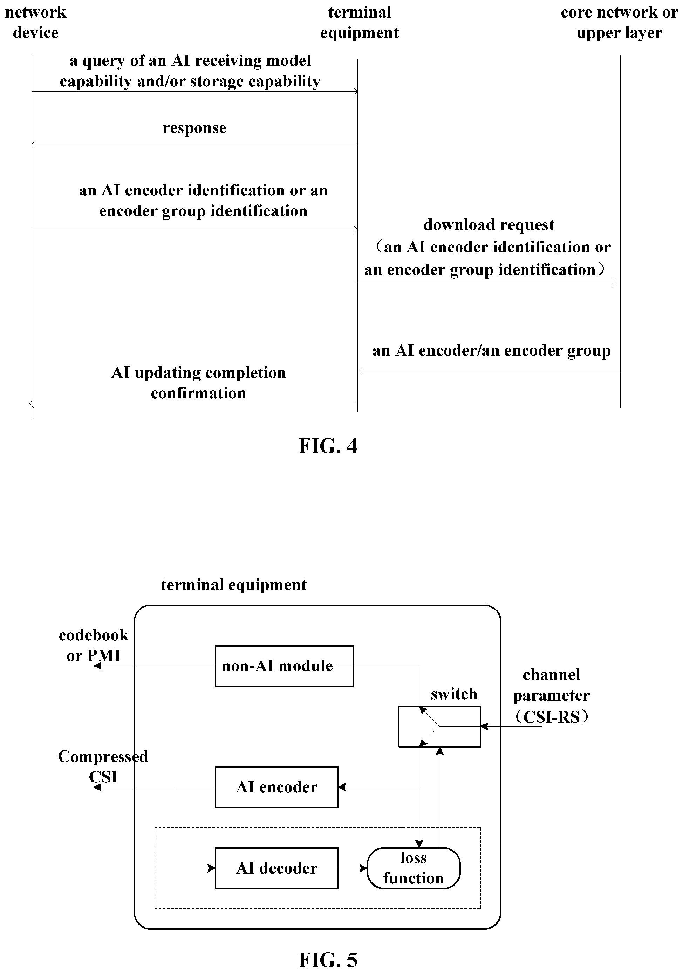

FIG. 4 is another schematic diagram of information transmission in the embodiments of the present application, exemplarily showing a situation in which AI query and AI release are combined. As shown in FIG. 4, the network device may query an AI receiving model capability and/or storage capability from the terminal equipment, and after receiving a response from the terminal equipment, the network device may transmit an AI encoder identification or an encoder group identification to the terminal equipment, the terminal equipment transmits a download request to a core network or upper layer according to the AI encoder identification or the encoder group identification, and after successfully receiving the encoder or the encoder group, the terminal equipment feeds back a confirmation message that AI update is completed, to the network device.

The above text schematically describes the situations for AI release or AI update. The following text then schematically describes the situations for AI monitoring, performance evaluation and AI training. AI may be monitored at a terminal equipment side or at a network device side, description is made below first by taking the terminal equipment side as an example.

In some embodiments, there exists an AI encoder for channel state information (CSI) in the terminal equipment, and there exists an AI decoder with an identification and/or a version consistent with that of the AI encoder in the network device, and the terminal equipment further has an AI decoder consistent with the AI decoder in the network device, and the terminal equipment performs performance monitoring and/or online training via the AI encoder and the AI decoder.

FIG. 5 is an example diagram of a terminal equipment in the embodiments of the present application. As shown in FIG. 5, different from that generally a terminal equipment is only deployed with an AI encoder, in the embodiments of the present application, paired AI decoder and AI encoder are deployed in the terminal equipment. In this way, during CSI measurement and reporting, input of an AI encoder and output of an AI decoder may be measured, and a loss function is calculated. Thereby, performance monitoring and performance evaluation on AI/ML may be performed at the terminal equipment side.

In some embodiments, when a result of the performance monitoring is lower than a threshold (poor performance), the terminal equipment transmits a stop request for stopping the AI encoder and the AI decoder.

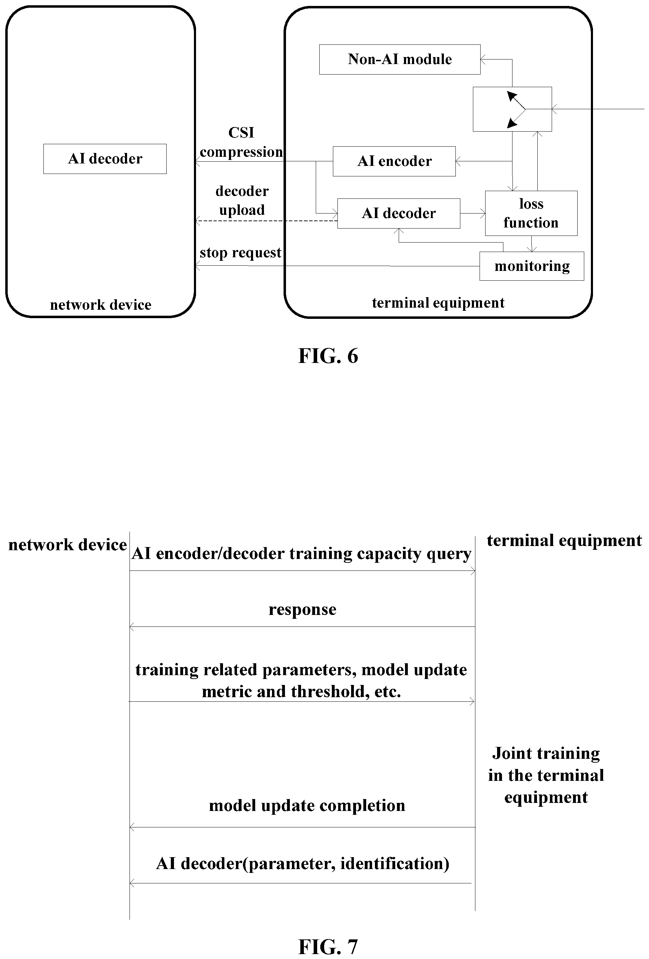

FIG. 6 is an example diagram of a network device and a terminal equipment in the embodiments of the present application. As shown in FIG. 6, monitoring may be performed by the terminal equipment. For example, if a metric related to performance monitoring exceeds a certain threshold, the terminal equipment may determine that the performance of AI is not good, thus may transmit a request for indicating that the performance of AI is not good to the network device, requesting to stop using AI for CSI compression and report.

In some embodiments, in a case where the capability query response or report includes capability information on that the terminal equipment supports performance monitoring, the terminal equipment receives metric information and/or threshold information for the performance monitoring configured by the network device.

For example, the network device queries AI encoder/decoder capabilities to the terminal equipment, and if the terminal equipment has an AI encoder and decoder, the terminal equipment may make a positive answer. The network device may configure the terminal equipment with a metric or a threshold for AI performance monitoring.

The terminal equipment may calculate a loss function, calculate a difference between AI encoder input and AI decoder output by using configured metric information or predefined metric information, and compare it with configured or predefined threshold information, thereby determining whether the AI encoder/decoder has a performance problem.

Based on a predefined determining condition, after determining that there is a performance problem, the terminal equipment requests the network device to stop using AI for CSI compression and report, and requests to switch to non-AI CSI measurement and report. After receiving a confirmation message from the network device, the terminal equipment continues CSI measurement and report in a non-AI manner.

In some embodiments, the terminal equipment receives a channel state information reference signal (CSI-RS) transmitted by the network device. The terminal equipment may perform performance monitoring and/or training by using the CSI-RS.

For example, a terminal equipment with an AI encoder/decoder may be trained, which may be called online training or self-training, to optimize a new AI/ML model based on original AI/ML model training in a case where an original AI model is running. As shown in FIG. 6, for example, after training at the terminal equipment side is completed, if performance meets certain indicators, the AI decoder may further be transmitted (uploaded) to the network device.

In some embodiments, in a case where the capability query response or report includes capability information on that the terminal equipment supports training, the terminal equipment receives parameter information for the training configured by the network device.

FIG. 7 is another schematic diagram of information transmission in the embodiments of the present application, exemplarily showing a situation in which AI query, AI training and AI update are combined. As shown in FIG. 7, for example, the network device queries the terminal equipment whether it has a capacity for AI training. After the terminal equipment makes a positive answer, the network device may configure training related parameters, a model update metric and a threshold for the terminal equipment.

In addition, when the performance of an original AI/ML model is not good, the terminal equipment may use its own AI encoder and AI decoder to perform joint training, and combine parameters configured by the network device to compare the performance of a new AI/ML model (trained) and the performance of the original AI/ML model. When a predefined condition and a configuration threshold are satisfied, the terminal equipment may inform the network device that the model update has been completed, and request resources from the network device to transmit a new AI/ML model to the network device, or the terminal equipment may transmit an updated AI/ML model to a core network, or transmit the updated AI/ML model to the network device via an upper layer.

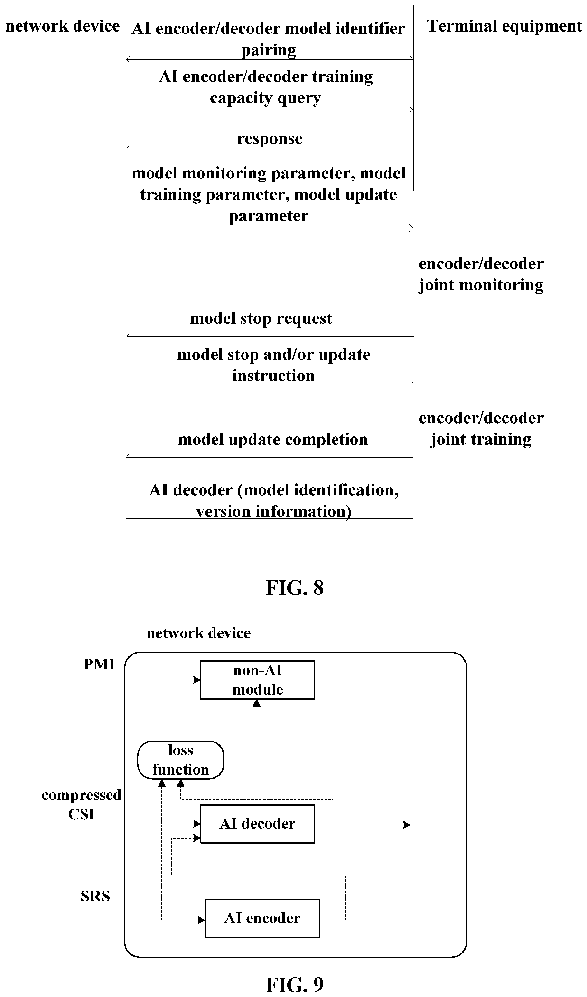

FIG. 8 is another schematic diagram of information transmission in the embodiments of the present application, exemplarily showing a situation in which AI query, AI monitoring, AI training and AI update are combined. As shown in FIG. 8, for example, after being paired with AI query of the terminal equipment, the network device may query the terminal equipment whether it has a capacity for AI training. After the terminal equipment makes a positive answer, the network device may configure model monitoring related parameters (a metric, a threshold, etc.), model training related parameters (a metric, a threshold, etc.), a model update related parameters (a metric, a threshold, etc.) for the terminal equipment.

The terminal equipment side may use its own AI encoder and AI decoder to perform joint monitoring, and evaluate the performance of AI. When the performance of an original AI/ML model is not good, the terminal equipment may transmit a model stop request to the network device.

Moreover, the terminal equipment may use its own AI encoder and AI decoder to perform joint training. Then, the terminal equipment combines parameters configured by the network device to compare the performance of a new AI/ML model (trained) and the performance of the original AI/ML model. When a predefined condition and a configuration threshold are satisfied, the terminal equipment may inform the network device that the model update has been completed, and request resources from the network device to transmit a new AI/ML model to the network device, or the terminal equipment may transmit an updated AI/ML model to a core network, or transmit the updated AI/ML model to the network device via an upper layer.

For another example, the terminal equipment and the network device have an AI encoder and an AI decoder belonging to the same model identification and/or version information, respectively, for processing channel state information. In addition, the terminal equipment further has the same AI decoder as the network device, which is used to monitor the performance and model training of joint working of the AI encoder and decoder.

After receiving a query about the AI model monitoring capability or training capability of the network device for CSI report, the terminal equipment gives a confirmation response if it has an AI encoder and decoder. In addition, after receiving metric information for monitoring the performance of AI encoder and decoder, the terminal equipment uses the metric information to monitor AI running. When a predefined condition is met, the terminal equipment transmits an indication or request information to the network device, requesting to stop running of the AI encoder/decoder.

Moreover, the terminal equipment may further receive the metric information on training transmitted by the network device, and the terminal equipment uses the metric information for training of the AI. When a predefined condition is met, the terminal equipment transmits an indication that AI model training is completed, to the network device. The network device transmits an indication and resource configuration to the terminal equipment to request the terminal equipment to upload the trained AI/ML model; the terminal equipment transmits this AI/ML model to the network device according to the indication. The indication may include identification information and/or version information of the AI model, wherein the version information is information added based on the original version information.

For a further example, the network device may deploy a set of AI encoders/decoders for the terminal equipment. The network device and the terminal equipment first run based on a set of AI encoders/decoders. When AI performance is not good, the terminal equipment may select other AI encoder/decoder to perform performance monitoring or performance evaluation. When an AI/ML model with better performance than an existing AI/ML model is found, the terminal equipment informs the network device, requests replacement of the AI/ML model and transmits a corresponding AI/ML model index.

The above text schematically describes situations in which a terminal equipment side performs AI monitoring, performance evaluation, and AI training, etc. The following text then schematically describes situations in which a network device side performs AI monitoring, performance evaluation, and AI training.

In some embodiments, there exists an AI encoder for channel state information (CSI) in the terminal equipment, and there exists an AI decoder with an identification and/or a version consistent with that of the AI encoder in the network device, and the network device further has an AI encoder consistent with the AI encoder in the terminal equipment, and the network device performs performance monitoring and/or training via the AI encoder and the AI decoder.

FIG. 9 is an example diagram of a network device in the embodiments of the present application. As shown in FIG. 9, different from that generally a network device is only deployed with an AI decoder, in the embodiments of the present application, paired AI decoder and AI encoder are also deployed in the network device. In this way, when a traffic is not busy, the network device may schedule a terminal equipment to transmit an SRS, inputs the SRS into an AI encoder, measure inputs of the AI encoder and outputs of an AI decoder, and calculate a loss function.

Thereby, performance monitoring and performance evaluation on AI/ML may be performed at the network device side. In particular, for a TDD channel, there is reciprocity between uplink and downlink channels, and the processing performance of an AI encoder/decoder for a downlink CSI-RS may be evaluated by its processing performance for an uplink SRS.

In some embodiments, the terminal equipment receives sounding reference signal (SRS) configuration information transmitted by the network device; and transmits a sounding reference signal (SRS) according to the configuration of the sounding reference signal (SRS). The network device may perform performance monitoring and/or training of an AI/ML model by using the SRS.

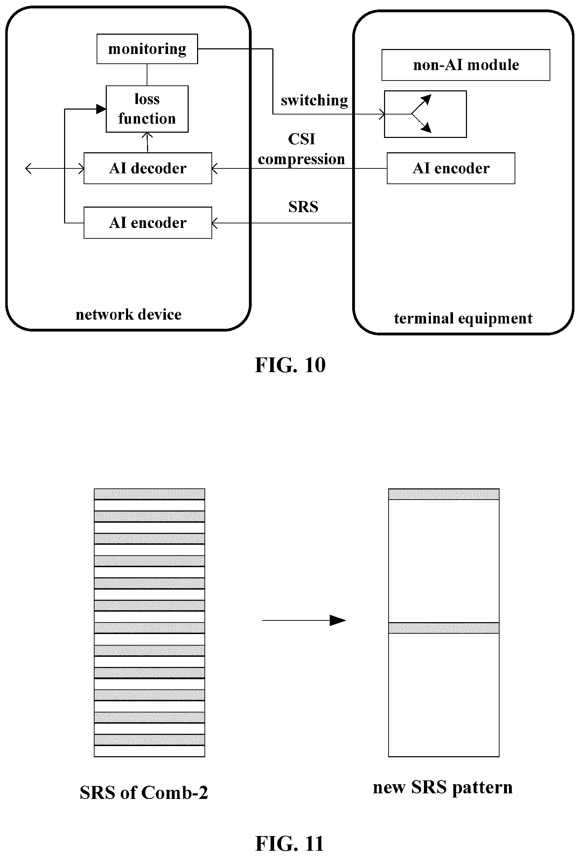

FIG. 10 is another example diagram of a network device and a terminal equipment in the embodiments of the present application. As shown in FIG. 10, monitoring and training may be performed by the network device. For example, training performed by the network device may be performed by using an SRS and using channel reciprocity. The network device may schedule the terminal equipment to transmit the SRS based on a configuration of a CSI-RS.

Since a density of the SRS is comb2 and comb4, which are much greater than an RS density of one CSI-RS per RB or one CSI-RS with two RBs in the CSI-RS, an SRS pattern with the same density as the CSI-RS may be designed so as to reduce the overhead caused by training.

FIG. 11 is an example diagram of an SRS in the embodiments of the present application. As shown in FIG. 11, compared to an SRS with comb2, an SRS pattern similar to the CSI-RS may be used in the embodiments of the present application. Thereby, training of an AI model at a network device side may be achieved. In addition, the density of a new SRS here is same as the RS density of a CSI-RS whose density is 1, which greatly saves the overhead of SRS training. This new-type SRS may be called an AI-specific SRS.

For example, the network device may pre-process a received SRS by referring to the configuration of the CSI-RS, then takes it as an input of an AI encoder, and inputs an output of the AI encoder into an AI decoder, then compares the output of the AI encoder with the input of the AI encoder in a loss function, to verify performance of AI encoding and decoding. In addition, if the loss function cannot satisfy a target, the network device may determine whether the AI encoder and AI decoder need to be stopped, either alone or in combination with HARQ NACK information from the terminal equipment.

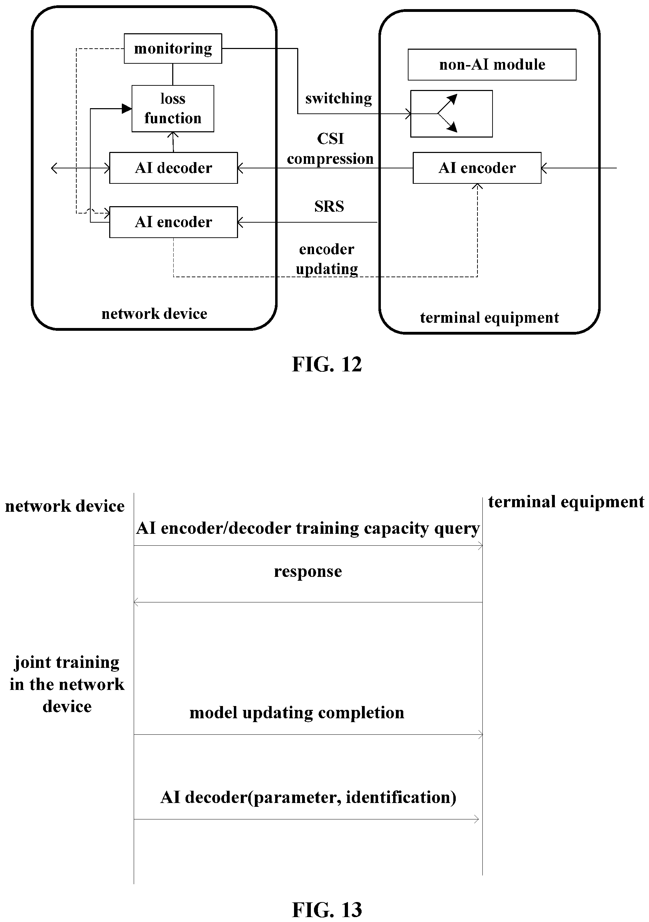

FIG. 12 is another example diagram of a network device and a terminal equipment in the embodiments of the present application. As shown in FIG. 12, for example, the network device may periodically schedule an AI-specific SRS or a general SRS to validate a trained AI model. If the loss function meets certain indicators wholly in a certain period of time, the network device determines that the performance of the AI model meets a requirement. For a terminal equipment that has stopped an AI encoder, the network device may transmit a model update indication and transmit an updated AI model to the terminal equipment, which contains AI index information and model data information.

In addition, before enabling a new AI model, the network device and the terminal equipment perform a pairing process, such as confirming indexes of an AI encoder and an AI decoder. Or, if model versions do not match, the network device may transmit the updated AI model to a core network or an upper layer, and notify the terminal equipment of the index of the AI model, so that the terminal equipment goes to a corresponding position to download the AI model.

Moreover, after training at the network device side is completed, if performance meets certain targets, the AI model (such as the AI encoder) may further be transmitted to the terminal equipment. After receiving an AI model, the terminal may transmit AI model identification information and/or version information to the network device or the core network. After receiving the identification information and/or version information, the network device confirms that update of the AI model is completed in a case where the model identification information and/or version information is(are) correct, otherwise, the network device will transmit the AI model again.

FIG. 13 is another schematic diagram of information transmission in the embodiments of the present application, exemplarily showing a situation in which AI query, AI training and AI update are combined. As shown in FIG. 13, for example, the network device queries the terminal equipment whether it has a capacity for assisting AI training (for example whether it is capable of transmitting an SRS for AI training). After the terminal equipment makes a positive answer, the network device may configure training related parameters, a model update metric and a threshold for itself.

In addition, when the performance of an original AI/ML model is not good, the network device may use its own AI encoder and AI decoder to perform joint training, and compare the performance of a new AI/ML model (trained) and the performance of the original AI/ML model. When a predefined condition and a configuration threshold are satisfied, the network device may inform the terminal equipment that the model update has been completed, and allocate resources to the terminal equipment to transmit a new AI/ML model to the terminal equipment, or the network device may transmit an updated AI/ML model to a core network, or transmit the updated AI/ML model to the terminal equipment via an upper layer.

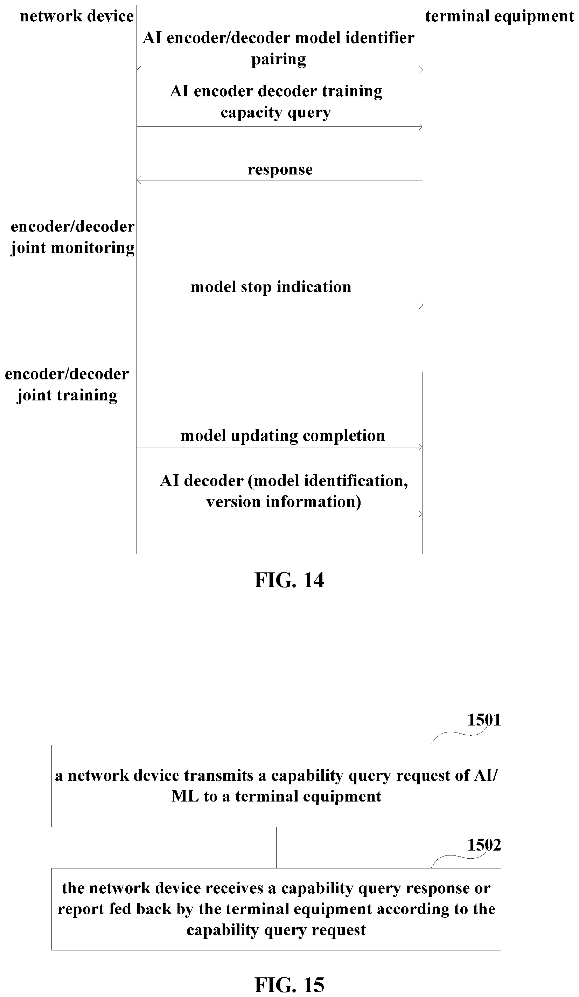

FIG. 14 is another schematic diagram of information transmission in the embodiments of the present application, exemplarily showing a situation in which AI query, AI monitoring, AI training and AI update are combined. As shown in FIG. 14, for example, after being paired with AI query of the terminal equipment, the network device may query the terminal equipment whether it has a capacity for assisting in AI training. After the terminal equipment makes a positive answer, the network device may configure model monitoring related parameters (a metric, a threshold, etc.), model training related parameters (a metric, a threshold, etc.), a model update related parameters (a metric, a threshold, etc.) for itself.

The network device side may use its own AI encoder and AI decoder to perform joint monitoring, and evaluate the performance of AI. When the performance of an original AI/ML model is not good, the network device may transmit a model stop indication to the terminal equipment.

Moreover, the network device may use its own AI encoder and AI decoder to perform joint training. Then, the network device compares the performance of a new AI/ML model (trained) and the performance of the original AI/ML model. When a predefined condition and a configuration threshold are satisfied, the network device may inform the terminal equipment that the model update has been completed, and allocate resources to the terminal equipment to transmit a new AI/ML model to the terminal equipment, or the network device may transmit an updated AI/ML model to a core network, or transmit the updated AI/ML model to the terminal equipment via an upper layer.

AI monitoring, AI training and AI update are described schematically above, and the present application is not limited to this. For example, description is made above by taking an AI encoder/decoder for CSI signal processing as an example, however it may further be applicable to any other scenario of using paired AI models.

Thereby, paired AI networks may be monitored, trained and updated online after deployment, so that the paired networks may adapt to various wireless environments through network update, giving this type of network a possibility of wide applications. In addition, performance and robustness of AI models may further be improved.

The following text schematically describes the SRS in the embodiments of the present application.

In some embodiments, in the sounding reference signal (SRS) configuration, a frequency domain density of the sounding reference signal (SRS) is in consistence with a frequency domain density of a channel state information reference signal (CSI-RS), and the number of resource blocks of the sounding reference signal (SRS) is in consistence with the number of resource blocks of the channel state information reference signal (CSI-RS).

In some embodiments, in the sounding reference signal (SRS) configuration, a frequency domain density of the sounding reference signal (SRS) is greater than a frequency domain density of the channel state information reference signal (CSI-RS), and the number of resource blocks of the sounding reference signal (SRS) is in consistence with the number of resource blocks of the channel state information reference signal (CSI-RS).

In some embodiments, a sequence length of the sounding reference signal (SRS) is a product of the number of resource blocks (RBs) occupied by the SRS and the frequency domain density of the channel state information reference signal (CSI-RS).

For example, the sequence length of the SRS is expressed as:

$$M_{\text{sc},b}^{\text{SRS}} = m_{\text{SRS},b} \cdot \rho,$$

or

$$M_{\text{sc},b}^{\text{SRS}} = m_{\text{SRS},b} N_{\text{sc}}^{\text{RB}} / K_{\text{TC}}, \; K_{\text{TC}} = N_{\text{sc}}^{\text{RB}} / \rho$$

where, $\rho$ is the frequency domain density of the CSI-RS, $M_{\text{sc},b}^{\text{SRS}}$ is the sequence length of the SRS, $m_{\text{SRS},b}$ is the number of RBs configured for the SRS, and $N_{\text{sc}}^{\text{RB}}$ is the number of subcarriers in an RB.

In some embodiments, the SRS is used to obtain downlink channel estimation based on the CSI-RS by using channel reciprocity and via uplink channel estimation based on the SRS. The SRS is used in training of an AI/ML model of downlink channel state information (CSI).

Each of the above embodiments is only illustrative for the embodiments of the present application, but the present application is not limited to this, appropriate modifications may be further made based on the above each embodiment. For example, each of the above embodiments may be used individually, or one or more of the above embodiments may be combined.

As may be known from the above embodiments, a terminal equipment receives a capability query request of AI/ML transmitted by a network device, and the terminal equipment feeds back a capability query response or report to the network device according to the capability query request. Thereby, AI/ML model running may be monitored, consistency of the AI/ML model running may be maintained, and robustness of the model running may be improved.

Embodiments of second aspect

The embodiments of the present application provide an information transmission method, which is described from a network device side, the contents same as the embodiments of the first aspect are not repeated.

FIG. 15 is a schematic diagram of an information transmission method in the embodiments of the present application. As shown in FIG. 15, the method includes:

1501, a network device transmits a capability query request of AI/ML to a terminal equipment; and
1502, the network device receives a capability query response or report fed back by the terminal equipment according to the capability query request.

It should be noted that the above FIG. 15 is only schematic description of the embodiments of the present application, but the present application is not limited to this. For example, an execution step of each operation may be adjusted appropriately, moreover other some operations may be increased or reduced. Persons skilled in the art may make appropriate modifications according to the above contents, not limited to the disclosure of the above FIG. 15.

Each of the above embodiments is only illustrative for the embodiments of the present application, but the present application is not limited to this, appropriate modifications may be further made based on the above each embodiment. For example, each of the above embodiments may be used individually, or one or more of the above embodiments may be combined.

As may be known from the above embodiments, a network device transmits a capability query request of AI/ML to a terminal equipment, and the network device receives a capability query response or report fed back by the terminal equipment according to the capability query request. Thereby, AI/ML model running may be monitored, consistency of the AI/ML model running may be maintained, and robustness of the model running may be improved.

Embodiments of third aspect

The embodiments of the present application provide an information transmission method, the contents same as the embodiments of the first and second aspects are not repeated. Moreover, the embodiments of the third aspect may be performed in combination with the embodiments of the first and second aspects, or may be performed separately, the present application is not limited to this.

In some embodiments, for examples in which AI/ML models are applied to air interfaces, in addition to CSI feedbacks, other application examples are further included, such as beam management, positioning, channel estimation, channel prediction, etc. In addition to switching a model based on a model identification, there are broader applications and considerations for the model identification.

For example, training deployment of a model may be completed by a chip, a terminal or a network manufacturer, and is completed by downloading at a network side, and these processes may not be within a range of a 3GPP air interface protocol. It is also possible to realize model training, model transmission, and model data set related transmission via participation of air interface protocol.

In order to ensure performance of a communication function corresponding to a model, it is usually necessary to monitor the performance of the model. And in order to adapt the model to various application environments, such as various wireless channel environments used by a terminal equipment, online training and update of a model are usually required. In addition, when the performance of the model is not good, switching one model to another model may be taken into account, or parameters of the model are fine-tuned, retraining and model update are performed, or use of the model is stopped, and a non-AI algorithm is used, etc.

Operations on the model may include the following types:

For example, it is related to model running or inference, that is, control the model running after the model is put into running. For example, start a model or activate a model, or close a model or deactivate a model. Switch from one model to another model, switch from a running state of the model to a non-AI /ML algorithm or fall back to a non-AI /ML algorithm. Or, an operation from deactivating a model to enabling a model.

For another example, it is related to a life cycle management of a model, such as model training, retraining, fine-tuning, model update, model transmission, model deployment, etc.

Of course, classification between these operations may be loose, and other types may further be included.

In order to achieve effective management of an AI/ML model, in some implementations, a network device provides a model identification (ID) for a terminal equipment, as mentioned in the preceding embodiments. Formats and contents of the model identification are discussed in more detail below. Here, the model identification is not limited to CSI information feedback, and other functional use cases, for example AI/ML such as beam management, positioning, channel estimation, channel state information prediction, terminal movement management, switching management prediction, beam failure prediction, etc., use cases applied to an air interface may be applicable.

In some other implementations, the terminal equipment makes a network side aware of model-related information by reporting the model identification. At this moment, it may be assumed that the terminal equipment has had a registered model identification, or the terminal equipment itself has a model identification which comes from a terminal manufacturer, a chip manufacturer, a third-party manufacturer, an AI/ML server, etc.

For example, a process of interacting a model identification between the network side and the terminal side may be a process of assigning the model identification or a process of reporting the model identification. Here, the above two processes are collectively called a model registration process. This process specifically corresponds to that a network side assigns an identification to a terminal side, or that the terminal side reports a model identification to the network side, which may be named according to a specific process.

In some embodiments, a terminal equipment receives query information of AI/ML transmitted by a network device, and the terminal equipment feeds back a query response or report to the network device according to the query information. Further, the terminal equipment may receive a report configuration for the query response or report, transmitted by the network device.

In some embodiments, the query response or report includes at least one of the following:

information on supporting AI/ML;
information on supporting a certain signal processing function;
a supported AI/ML model group identification;
a supported AI/ML model identification;
a supported version identification of the AI/ML model;
information on supporting update of the AI/ML model;
information on supporting performance monitoring or performance evaluation of the AI/ML model;
information on supporting training of the AI/ML model;
information on a degree of collaboration between the AI/ML model and a network;

information on a degree of interaction between the AI/ML model and the network;
information on ownership indication of the AI/ML model;
information on whether a terminal side is capable of transmitting data or a data set related to the AI/ML model;
information on storage of the AI/ML model.

For example, the network side queries the terminal side about AI/ML model related information, and configures a content and a format of model report. The terminal side reports its AI/ML information, and performs a process of reporting and/or registration to the network side. Information reported by the terminal side is configured according to the model report, and may include model feature information and/or model identification information, the model identification information here is provided by the terminal side.

It should be noted that the model identification information, if it exists, may come from a terminal manufacturer, a chip manufacturer, a third-party manufacturer, a remote OTT AI/ML server, and so on. Or, the model identification information is model identification information whose registration has been completed.

For example, the information on ownership indication of the AI/ML model is used to indicate information related to the ownership of intellectual property rights of the model. For example, it may indicate that information inside the model can or cannot be reported to the network side, or it may further include other more detailed information, such as information about a source of the model. Information indication mode here is predefined. Through such indication, the network side may know whether the terminal side is allowed to report relevant internal information of the model to avoid unnecessary signaling overhead or waiting time.

For another example, the information on the degree of collaboration between the model and the network may be given based on different operations or processes. For example, whether a terminal equipment of the model supports transmission of the model from the network side to the terminal side; whether the model supports transmission of a data set for training from the network side; whether the model supports interactive training (network-side and terminal-side models conduct joint training, and transmit training parameters of forward propagation and back propagation to each other); whether the model may be updated and whether the update operation is decided by the network side; whether training and fine tuning of the model may be monitored or controlled by the network side, etc. Through these operations or processes related to model life cycle management such as model training and transmission, it is helpful for the network side to understand a scope of mutual collaboration at an initial stage of interaction with the model, and avoid subsequent unnecessary signaling overhead and miss-operation of the model.

For another example, some terminal-side model architectures cannot be changed, but can receive transmission of model parameters, or can accept online training and optimization by a network side on model parameters of a terminal side. Relevant information on the degree of collaboration is transmitted to the network side, so that the network side may know the degree of collaboration of model training that may be carried out with the terminal side, which improves a training speed and efficiency.

For another example, the information on the degree of interaction between the AI/ML model and the network may be given based on different operations or processes, and is mainly related to a running process of the model. For example, when the terminal side has multiple models for a certain communication function, whether the network side may select a model; whether the network side may enable a model or end running of a model; whether the network side may cause the terminal side to stop using a model and use a non-AI processing mode; whether the network side may cause the terminal side to stop the non-AI processing mode and change to use a processing mode of an AI model; whether the network side may let the terminal side report information or parameters related to model output, and so on. Through these information, it helps the network side better control and monitor running of a terminal side model, and ensure or improve communication performance.

For another example, whether the terminal side may transmit AI/ML model-related data or data set information, if the network side may confirm such information, the network side may command the terminal side to collect data for training and may further accumulate data sets for training, and by transmitting configuration information, the network side asks the terminal side to report collected training data or data sets.

For another example, data or data sets collected by the terminal side may be bound to an identification of the model, as an identification of the data sets.

For another example, the network side confirms reception of relevant model information, may generate a model identification assigned by the network side according to operations on the model of a specific use case and a specific need, and operation permissions for the model etc., and transmits the model identification to a terminal.

In some embodiments, a collaborative level may include a combination of one or more model operations. Different collaboration levels correspond to different model operations.

For example, information on different collaboration levels may be indicated by using a combination of several bits, one or more operations corresponding to each collaboration level is/are predefined or pre-configured to identify which model life cycle management processes or operations may be supported, and/or processes or operations related to model running or model inference.

For another example, a collaboration level corresponds to model selection, model switching, model activation, model deactivation, transition from an AI/ML model method to a non-AI /ML method, and transition from a non-AI /ML method to an AI/ML model method.

For another example, a collaboration level includes model transmission support information.

For another example, a collaboration level includes information that does not support model transmission but supports network-side and terminal-side signaling interaction.

For another example, a collaboration level includes information that does not support signaling interaction.

Table 1 below gives an illustration of a model process or combination of operations corresponding to the collaboration level information or a collaboration level configuration ID, which serves as an example of the embodiments of the present application.

Table 1

| Collaboration level configuration ID | List of network and terminal model interaction supported by collaboration levels |
|---|---|
| 000 | Not support signaling interaction |
| 010 | Support signaling interaction, not support model transmission |
| 011 | Support signaling interaction, and support model transmission |
| 100 | Support model selection, model switching, model activation, model deactivation, and transition from an AI/ML model method to a non-AI /ML method |
| 101 | Support model upgrade and may receive data set training |
| 110 | Support interactive training, corresponding to a bilateral model |
| 111 | Support model fine-tuning, online training |

The embodiments of the present application are not limited to the examples shown in Table 1, and examples of other combinations of operations are not given one by one.

In addition, an indication method of the above information on the degree of interaction is similar to the information on the degree of collaboration, they differ in that the degree of interaction is more focused on various operations in a running stage (model inference) of the model. For example, when the terminal side has multiple models for a certain communication function, whether the network side may select a model; whether the network side may enable a model or end running of a model; whether the network side may cause the terminal side to stop using a model and use a non-AI processing mode; whether the network side may cause the terminal side to stop the non-AI processing mode and change to use a processing mode of an AI model; whether the network side may let the terminal side report information or parameters related to model output, and so on. Some operations or processes overlap with those in the degree of collaboration. For this situation, according to specific configuration information of the network side, the terminal side only needs to make a response, which will not cause ambiguous understanding.

The information on the degree of interaction may further be indicated via a corresponding configuration ID and a corresponding operation combination, different levels correspond to different operations or operation combinations, which are not listed here one by one.

In some embodiments, alternatively, the network side decides a possible operation and an operation that cannot be performed by the network side on a model in a next step, according to the information on model report. For example, if terminal side report may receive transmission of the model, the network side will transmit the model or model parameters to the terminal side when necessary. Alternatively, if the terminal side report has multiple models for a certain function and model selection and model switching may be performed by the network side, the network side decides which model is enabled by monitoring the performance of the multiple models, or switches from a running model to a standby model, and the model switching is achieved by different IDs given by the network side to each model in this example. Principles of other processes are similar, and are not listed one by one.

In some embodiments, the terminal equipment receives configuration of a model identification format, transmitted by the network device.

For example, in order to ensure that the terminal side has a consistent understanding on a model identification of the network side, in addition to being based on predefined rules, it may further be based on configuration of the network side, i.e., the network side first transmits a format configured with the model identification to the terminal side. Then a network-side model identification (ID) is transmitted to the terminal side, which may further be called that a registered model identification (ID) is transmitted to the terminal side.

For a model whose registration has been completed at the terminal side, a model identification reassigned by the network side may be the same or different. If they are the same, they may be confirmed by identifying the same signaling or according to predefined rules, the network side does not need to assign a registered model identification any more.

If the network side and the terminal side have not reached an agreement on a naming rule and format of the model identification, the network side further needs to transmit a model identification format and transfer related information to the terminal side. The terminal side confirms to the network side its successful reception after successful reception.

The network side then manages said model operations for a model of the terminal side by using all or part of the model identification information, i.e., operations such as control, scheduling related to the above-mentioned model running (inference) and model life cycle management operation, in whole or in part. For example, activating running of a model identification is to enable the running of the model, or deactivating the running of the model is to close the model. Or switching is from one model to another model, model switching is achieved by activating and deactivating models with different model identifications.

For another example, the network side queries the terminal side about AI/ML model related information, and configures a content and a format of model report. The terminal side reports AI/ML information, and performs a process of registration to a network. During the registration process, the model identification information is assigned by the network side to the terminal side. The model identification information is generated based on report information of the terminal-side model and a management operation demand of the network side on the model.

For another example, the terminal-side model is obtained by network transmission, in this case, an identification of the model may further be obtained when the model is transmitted. Update of the model also needs to be obtained by network transmission. In this situation, generally, a terminal does not need to register at the network side any more. Or, if needed, it is carried out according to the procedure in which registration has been completed at the terminal side.

In some embodiments, the model identification format includes at least one of the following fields:

> a field of a model function;
> an identifier field of neural network related information of a model;
> fields of model input and output parameters;
> pre-processed and/or post-processed field(s) of a model;
> a field of version information of a model;
> field(s) of a model group and/or a group member;
> a field of a model source;
> a field of model ownership;
> a field of a model operable level;
> a field of a model collaborative level;
> a field for which a model may collect and report data;
> a field of upgrade information of a model; or
> field(s) of training and/or retraining of a model.

For example, model information that the network side expects the terminal side to report may include the following model feature information, which may be reported via corresponding feature fields. According to a report format configured for a network, reported information may include at least one of the preceding feature fields.

For example, the field of the model function may indicate different model functions. This design enables the network side to understand or control a model function corresponding to each function of the terminal side. For example, in this field, a model identification corresponding to CSI feedback is different from a model identification for beam management.

For example, the identifier field of neural network related information of a model includes a neural network type, architecture, etc., and in this identifier field, different identifiers may identify different types and architectures of models, for example CNN, RNN, LSTM, etc., are marked using different identifiers. In this way, the network side may understand model information of the terminal side, which helps it to monitor, fine-tune, train and update the model. For example, with each update, the version information increases.

For example, the fields of model input and output parameters represent input/output dimension configuration information of the model.

For example, for a field that identifies version information of the model: if the model identification is assigned by the network side to the terminal side, the model identification field contains model version information given by the network side to the terminal side; and if the model identification is reported by the terminal to the network side, information reported by the terminal side or the model identification contains the model version information.

For example, the pre-processed and/or post-processed field(s) of the model represent(s) parameter descriptions of model pre-processing and post-processing. The field(s) of a model group and/or a group member represent(s) the number of model members for a function.

For example, for the field of a model source: an identification of the model may come from a network, or may come from a terminal vendor, or a third-party vendor, etc. The field of a model source may enable the network side to know administrative permissions to the model. For example, a model identification of a terminal has been given by a base station or network device, after switching to other base station, through reporting, a switched base station may know a source of its identification, for example it is given by the network device, then a further message may be obtained directly from a corresponding identification field, without requiring additional messages.

For example, for the field of a model ownership: since a model has intellectual property rights, attributes or information of the intellectual property rights of the model may be reflected in a model identification, for example the model is closed, may be open source, or may be partially shared, etc.

For example, the field of a model collaborative level indicates which operations may be performed by a network, according to different levels. A level is given by a pre-definition or by a configuration, for example is given by a configuration of RRC signaling.

For example, for the field of upgrade information of a model: whether the model may be upgraded, whether only a hyper-parameter part may be upgraded, whether an architecture may be upgraded, or whether the model may upgrade last level information or last multi-level information may be reflected in this field.

Some of the fields related to an identification are listed above, the present application is not limited to these. Description is further made below.

In some embodiments, fields that identify relationships between a model and a UE identification may further be included.

For example, the model is a model per UE, and the model is bound to a terminal or a terminal identification. The model identification has fields bound to the terminal identification, all or part of the terminal identification (such as various identifications of a UE) at the terminal side are used to form or generate the model identification. Based on scheduling to the terminal side, the network side may control ON and OFF of the model via activation and deactivation for a specific function, such as CSI feedback, without necessarily using the model identification to perform relevant control or operations. For operations such as model upgrade, switching, etc., they need to be completed accordingly based on a change of the model identification.

Or, the model identification is scrambled using information of a UE identification.

In some embodiments, fields that identify relationships between a model and a cell identification may further be included.

For example, the model is a model per cell, that is, the model is bound to a cell. The model identification has fields bound to a cell identification, PCI of the cell may be used in whole or in part to form or generate the model identification field. Model ON and OFF and model switching update are also of a cell level. For example, model management and operations of the model may be controlled via cell common control signaling.

Or, the model identification is scrambled using cell information such as PCI.

In some embodiments, fields that identify a model group and/or a group member may further be included.

For example, the terminal side may use a model group containing multiple models so as to adapt to different wireless environments, or different parameter configurations (such as different input dimensions and different output layer dimensions), or correspond to different pre-processing or post-processing modes. The above text only schematically describes model group composition reasons, there may be other reasons to form a model group. For the above model group of multiple models corresponding to a communication function, a single-level or multi-level way to identify may be adopted.

For example, existence of a model group is not considered in a model identification, and different identifications are directly given to different member models of a model group. That is, a single-level model identification is used.

For another example, the model identification simultaneously includes a model group identification field and a member model identification field. Different members have the same model group identification field, and different member identification fields. As shown in the following Table 2:

Table 2

| Model group identification field(s) | Member identification field(s) |
| --- | --- |

That is, a multi-level model identification is used. For example, when the network side and the terminal side have the same understanding on a model group identification, the network side may only use a member identification to schedule, control or manage each member model of the terminal side via signaling. Overhead is saved.

For another example, the network side assigns a model group identification only to the terminal side, and the terminal side needs to report that it has multiple member models, to the network side. Switching between member models in the model group is requested by the terminal side to the network side, and the network side transmits a response acknowledgment. Or, the terminal side only reports a model group identification to the network side, the terminal side needs to be informed that it has multiple group member models, or that it has a capacity of capable of performing model switching.

For another example, for a model group with a certain function, the network side only assigns a model identification not a model group identification to a member model. On the network side, selection of a model and switching between models may be realized via a member model.

In some embodiments, a field that identifies a terminal ID may further be included.

For example, the model is a model per UE, and the model is bound to a terminal, or is bound to a terminal identification. The model identification is based on the terminal identification of the terminal side (such as various identifications of a UE), all or part of the UE ID is used to form the model identification. Based on scheduling to the terminal side, the network side may control ON and OFF of the model via activation and deactivation for a specific function, such as CSI feedback, without necessarily using the model identification to perform relevant control or operations. For operations such as model upgrade, switching, etc., they need to be completed accordingly based on a change of the model identification.

For another example, another mode for the model per UE to associate with a UE is to scramble a model identification by using UE IDs, the UE IDs may be various IDs defined by an identification, including configured temporary IDs.

For a further example, the model is a model per cell, that is, the model is bound to a cell, thus the model identification is also based on a cell, PCI of the cell may be used in whole or in part to form a model identification. Model ON and OFF and model switching update are also of a cell level. For example, model management and operations of the model may be controlled via cell common control signaling.

For another example, another mode for the model per cell to associate with a UE is to scramble a model identification by using a cell ID, the cell ID may be PCI.

In some embodiments, a model identification of a model reported by a network side to a terminal is unique within a network.

In some embodiments, an operable level of an AI/ML model may be represented via a configuration ID, also called an interoperable level. The operable level includes at least one of the following: model activation, model deactivation, model rollback, from rollback to model activation, model switching, or model life cycle management. Each operation level corresponds to one or more operation combinations, and different operation levels correspond to different operations or operation combinations.

For example, corresponding to different configuration IDs, corresponding model operations that may be performed are given. Table 3 schematically shows an example of a list of operable levels, other configuration selections may be inferred in the same manner.

Table 3

| Configuration ID | List in which operations may be performed |
| --- | --- |
| 00 | model activation, model deactivation, fallback |
| 01 | the above operations, and/or model switching |
| 11 | the above operations, and/or life cycle management operation |

In some embodiments, field information on the collaborative levels may be indicated by using a combination of several bits, one or more operations corresponding to each collaboration level is/are predefined or pre-configured to identify which model life cycle management processes or operations are supported, and/or processes, signaling or interactive operations related to model running or model inference.

For example, a collaboration level corresponds to model selection, model switching, model activation, model deactivation, transition from an AI/ML model method to a non-AI /ML method, transition from a non-AI /ML method to an AI/ML model method, one or more of the above processes, and process-related signaling.

For another example, a collaboration level includes model transmission support information.

For another example, a collaboration level includes information that does not support model transmission but supports network-side and terminal-side signaling interaction.

For another example, a collaboration level includes information that does not support signaling interaction.

Table 4 below gives an illustration of a model process or combination of operations corresponding to the collaboration level information or a collaboration level configuration ID, which serves as an example of the embodiments of the present application.

Table 4

| Collaboration level configuration ID or collaboration level information field indication | List of network and terminal model interactive operations supported by collaboration levels |
|---|---|
| 000 | Not support signaling interaction |
| 010 | Support signaling interaction, not support model transmission |
| 011 | Support signaling interaction, and support model transmission |
| 100 | Support model selection, model switching, model activation, model deactivation, transition from an AI/ML model method to a non-AI /ML method |
| 101 | Support model upgrade, and may receive data set training |
| 110 | Support interactive training, corresponding to a bilateral model |
| 111 | Support model fine-tuning, online training |

There may be overlap between operations or operation combinations of operation levels and collaboration levels. For this situation, according to specific configuration information of the network side, the terminal side only needs to make a response, which will not cause ambiguous understanding.

In some embodiments, configuration of the model identification format is carried via Radio Resource Control (RRC) signaling and/or a MAC CE and/or Downlink Control Information (DCI).

For example, reporting which fields may be given by a report configuration, the number of bits corresponding to different fields may be predefined, or given by the report configuration. The report configuration is generally carried by RRC signaling, but may also be carried in whole or in part by a MAC CE or DCI information.

In some embodiments, the terminal equipment transmits identification information to the network device.

For example, the identification information includes at least one of the following:
identification information of a signal processing function, identification information of an AI/ML model, version information of the AI/ML model, identification information of an AI/ML model group, intra-group identification information of the AI/ML model group, type information of the AI/ML model, or storage size information of the AI/ML model or the AI/ML model group.

For example, the identification information transmitted by the terminal equipment is a terminal side model identification.

In some embodiments, the terminal equipment receives identification information transmitted by the network device.

For example, the identification information includes at least one of the following:
identification information of a signal processing function, identification information of an AI/ML model, version information of the AI/ML model, identification information of an AI/ML model group, intra-group identification information of the AI/ML model group, type information of the AI/ML model, or storage size information of the AI/ML model or the AI/ML model group.

For example, the identification information transmitted by the network device is a registered model identification or a network side model identification.

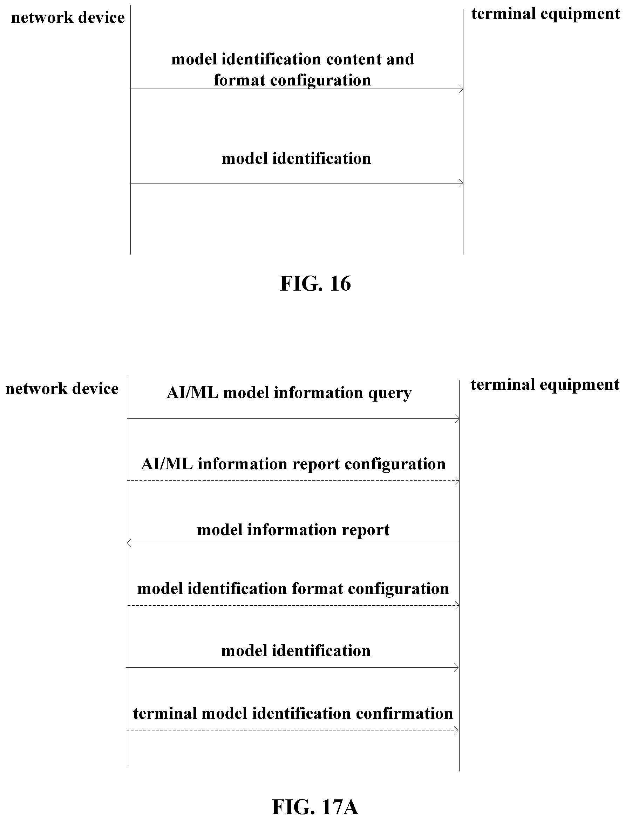

FIG. 16 is an example diagram of a model identification in the embodiments of the present application. As shown in FIG. 16, the network device may transmit configuration information on the content and format of the model identification to the terminal device, and may transmit the model identification to the terminal equipment.

For example, the model identification content and format configuration may be via RRC signaling which includes a domain of model identify fields, and the corresponding number of bits. For assigning the model identification to the terminal on the network side, the terminal side may understand the meaning of the model identification configured by the network side accordingly. For the terminal side reporting the model identification to the network side, the terminal side reports corresponding identification information accordingly.

FIG. 17A is another example diagram of a model identification in the embodiments of the present application. As shown in FIG. 17A, the network device may transmit model query information to the terminal equipment, and transmits an information report configuration (optional) to the terminal equipment, and the terminal equipment may report model information accordingly.

As shown in FIG. 17A, the network device may further transmit configuration information (optional) on the format of the model identification to the terminal equipment, and may transmit the model identification to the terminal equipment. Moreover, the network device may further transmit confirmation information (optional) on a terminal side model identification to the terminal equipment.

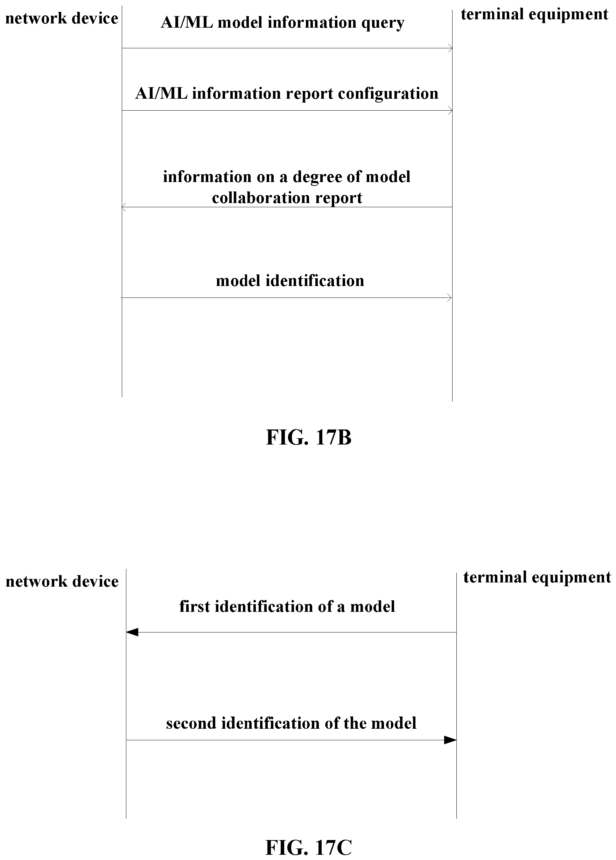

FIG. 17B is another example diagram of a model identification in the embodiments of the present application. As shown in FIG. 17B, the network device may transmit model query information to the terminal equipment, and transmits an information report configuration to the terminal equipment, and the terminal equipment may report information on a degree of model collaboration accordingly.

As shown in FIG. 17B, the network device may further transmit a model identification to the terminal equipment. In addition, although it is not shown in FIG. 17B, the network device may further transmit configuration information on the format of the model identification, and so on to the terminal equipment.

An indication of the model identification is schematically described below.

In some embodiments, the terminal equipment further receivers a bitmap and/or a subnet mask transmitted by the network device; and the terminal equipment transmits identification information to the network device according to the bitmap and/or the subnet mask.

For example, the network side and the terminal side have a consistent understanding on the content and format of the model identification according to predefined rules and/or specific use cases, or the network side indicates the content and format of the model identification reported by the terminal side via a configuration, or the network side indicates the content and format of the model identification assigned to the terminal side via a configuration. A subnet mask mode may be used to specify which fields of the model identification assigned by the network side or which fields need to be reported by the terminal side.

For example, the network side and the terminal side have a consistent understanding on a format of the following model identification, a sequence of fields and the number of bits in each field, based on predefined or previous configuration messages:

Table 5

| Model function field | Model group identification field | Member model field | Version field |
|---|---|---|---|

Then, the network side may transmit the following mask to the terminal side:

Table 6

| 111...111 | 111...111 | 0000 | 00 |
|---|---|---|---|

The terminal side may only report a member model identification (such as 4bit) and version field information (such as 2bit).

When the network side assigns a terminal side model identification, a similar method may also be used to assign necessary identification fields to the terminal side. Content and format of each field of the model identification may be predefined, or configured by a network.

For another example, a sequence of the above fields and the number of bits are predefined. The network device configures which fields are transmitted or are not transmitted by means of a bitmap, 1 indicates that the field is transmitted, and 0 indicates that the field is not transmitted.

For a further example, the network side configures the presence of fields in the model identification, and/or the corresponding number of bits via RRC signaling. For example, the signaling is content and format configuration information of the model identification, including:

```
{
model version, 3bit;
the number of model group members 2bit;
model function: 4bit;
}
```

In some embodiments, the network side may better control and manage a model through the above model registration processes for the network side and the terminal side. For example, according to monitoring of model performance, the network side may determine whether the model may run normally, and when a running effect is not good, a model may be stopped or deactivated via an indication of a model identification, and another model is started or activated via the model identification.

In addition to the activation, deactivation, model selection and model switching based on the model identification, model training, model fine-tuning, model update, model transfer, model deployment and so on may further be managed based on the model identification. After the network side and the terminal side reach the same understanding on the format and content of the model identification via a configuration, model operations based on the model identification may be transmitted via RRC signaling, or a MAC CE, or DCI.

In some embodiments, the model identification may transmit some or all of relevant model identification information in a network node or a network entity, according to needs on the above various model operations. For example, transmission may be carried out in a base station, a core network and other equipment, and for the content about model transmission, the embodiments of the first aspect may further be referred to.

The model identification is schematically described below. For the application of AI/ML in an air interface of a wireless communication system, a network-side device and a terminal equipment may interact for model identification information.

For example, the network device may query its AI/ML capability information from the terminal equipment, wherein the network device may query an AI/ML capability from the terminal equipment for a certain function, or query support of the terminal equipment on the AI/ML for different functions, multiple functions, or all air interface processing functions. To query the above information, the network device may further transmit report configuration information for information report to the terminal equipment. After receiving the query information and/or the report configuration information, the terminal equipment reports relevant model information. The reported information may include identification information of the model, such as first identification information. The function may be CSI compressed feedback, CSI prediction, beam prediction, positioning and other functions, or a sub-function under a function, for example the beam prediction may be divided into beam time domain prediction and beam frequency domain prediction, etc.

A model identification of an AI/ML model or an AI/ML partial model of the terminal equipment side may be given by a model developer or a model owner, such as a chip manufacturer, a terminal manufacturer, a network device manufacturer, an operator, etc. The model identification may be called a first identification of the model, may be a global unique identification of the model in a mobile communication network or system, or an identification named by multiple manufacturers according to unified rules, or when the terminal equipment is accessed to the mobile communication network, the model identification is given by a network and is an unique global identification inside the network. The identification above may also be referred to as a first identification of the model, the first identification may be permanent or temporary.

For example, the first identification of the model may carry or indicate at least one of the following information: code information of the model, function indication information of the model, sub-function indication information of the model, manufacturer information of the model, version information of the model, neural network structure information of the model, updatability information of the model, input and output information of the model, input and output preprocessing information of the model, owning group information of the model, PLMN information, AMF information, or LMF information, etc.

In some embodiments, the report information of the terminal equipment may include: the first identification information of the model, and/or model configuration information related to the first identification information. The model configuration information may include at least one of the following: function indication information of the model, sub-function indication information of the model, neural network structure information of the model, updatability information of the model, input and output information of the model, input and output preprocessing information of the model, manufacturer information of the model, version information of the model, owning group information of the model, PLMN information, AMF information, or LMF information, etc.

The processes of querying at the network side and reporting at the terminal side may be implemented through interaction of RRC messages after RRC connection is established between the terminal equipment and the network device. The above model identification information is represented, for example, by binary bits.

After receiving the report information, the network device may further specify second identification information of the model to the terminal equipment according to the content of the report information. For example, a bit length of the second identification information is smaller than a length of the first identification information; the second identification information is not global identification information, but is local identification information. The locality refers, for example, to model identification information in a connection corresponding to the network device, or in a terminal equipment residing under the network device. Functions of the second identification information include: the network device and the terminal equipment interact with each other based on the second identification; such as model activation, deactivation, model switching, fallback from an AI/ML model to a traditional method, etc.

In the above process, the network device may receive multiple model reports from the terminal equipment for a function, such as reporting multiple first identifications. This situation may occur in a bilateral model of CSI feedback, the terminal equipment reports first identifications of multiple CSI construction models supported by the terminal equipment. The network device may not necessarily support all models reported by the terminal equipment. The network device may inform the terminal equipment of a CSI construction model identification supported by the network device, via the second identification.

For example, as shown in Table 7, the terminal equipment may successively report the first identifications and/or information of the models supported by the terminal equipment, and the network device successively transmits the second identifications and/or information of the corresponding models accordingly.

Table 7

| Terminal reports first identifications | Network device transmits second identifications |
|---|---|
| A1 | B1 |
| A2 | B2 |
| A3 | B3 |
| ... | ... |

For another example, as shown in Table 8, the terminal successively reports the first identifications and/or information supported by the terminal, and the network device feeds back the second identifications only for models supported by the network device. in this situation, the network device may successively transmit corresponding second identifications, and feeds back NULL or does not feed back for unsupported positions, or uses 0 to indicate nonsupport.

Table 8

| Terminal reports first identifications | Network device transmits second identifications |
|---|---|
| x1x1x1x1x1x1x1x1x1x1x1 | NULL |
| y1y1y1y1y1y1y1y1y1y1y1 | y2y2y2y2 |
| z1z1z1z1z1z1z1z1z1z1z1 | z2z2z2z2 |
| ... | ... |

For another example, as shown in Table 9, the network device transmits configuration information about the second identifications of the model, such as bitmap information. The network device gives and transmits the second identifications only for the model with the corresponding bit being 1 in the bitmap.

Table 9

| Terminal equipment reports first identifications | Network device transmits a bitmap | Network device transmits second identifications |
|---|---|---|
| x1x1x1x1x1x1x1x1x1x1x1 | 0 | N/A |
| y1y1y1y1y1y1y1y1y1y1y1 | 1 | y2y2y2y2 |
| z1z1z1z1z1z1z1z1z1z1z1 | 1 | z2z2z2z2 |
| ... | ... | ... |

FIG. 17C is a schematic diagram of model identification interaction in the embodiments of the present application. As shown in FIG. 17C, the terminal equipment may report the first identification of the model, and the network device may give the second identification to the terminal equipment and transmit it to the terminal equipment. After receiving the second identification of the model, the terminal equipment and a network device connected with the terminal equipment may perform operations such as model activation, deactivation, model monitoring, model switching, model data collection, based on the second identification.

The following is a description of a model function, the model function may be graded, that is, represented using multiple functional levels.

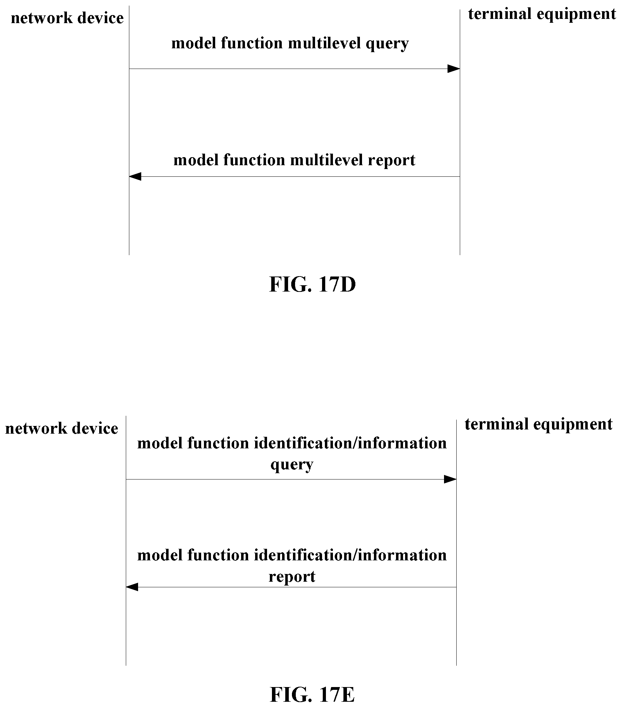

FIG. 17D is a schematic diagram of model function interaction in the embodiments of the present application. As shown in FIG. 17D, the network device may transmit multi-level function query of the model to the terminal equipment, and the terminal equipment may feed back function multi-level report of the model to the network device.

For example, the terminal equipment may receive an AI/ML-related model report request and/or configuration information of the network device, and via the model report configuration information, the network device may query AI/ML multilevel functional information of the terminal equipment accordingly, such as a first function or first function configuration information, and/or, a second function or second function configuration information, and/or, a third function or third function configuration information. The second function /the second function configuration may be a sub-function/a sub-function configuration of the first function /the first function configuration, and the third function/the third function configuration may be a sub-function/a sub-function configuration of the second function/the second function configuration.

The terminal equipment may transmit its AI/ML model information based on the model report configuration information. The function report is given by function identification information or function indication information. The function identification information or function indication information is used to indicate or identify support for a function, and different functions have different identifications. For example, the first function may be a CSI feedback, or beam prediction, or positioning, corresponding to different identifications or indication information respectively. For example, 2 bits indicate the above function, 00 indicates CSI feedback, 01 indicates beam prediction, and 10 indicates positioning.

For example, when the first function is beam prediction, the second function may be time domain prediction or frequency domain prediction, and the third function may be for a scenario, such as indoor, outdoor macro cell, outdoor high speed, outdoor low speed, etc. For another example, when the first function is CSI feedback, the second function may be CSI compression, the third function may be an input feature vector, and the fourth function may correspond to an application scenario and location, etc, Similarly, there may be more types of classification methods.

For example, for a certain type of function, multilevel query of the function is presented via predefined signaling, for example, it is predefined by a multi-level query structure via signaling of an RRC message. The terminal equipment reports corresponding capabilities according to predefined rules based on the multi-level structure; report may be completed via a corresponding capability identification indication, such as a bitmap.

Table 10 exemplarily shows some classifications.

Table 10

| First function | Second function | Third function | Fourth function |
|---|---|---|---|
| CSI feedback | CSI compression | Input feature vector | indoor |
| | | | outdoor (uma, umi) |
| | | Input original channel | |
| | | | |
| | CSI prediction | ... | |
| Beam management | Beam time domain prediction | High speed | ... |
| | | Intermediate speed | |
| | | Low speed | |
| | Beam frequency domain prediction | | |
| | | | |

For another example, identifications are predefined for different functions and sub-functions, the network device queries via the multilevel function identification, and the terminal equipment performs reporting based on the query.

Table 11 exemplarily shows some other classifications.

Table 11

| First function | Second function | Third function | Fourth function |
|---|---|---|---|
| CSI feedback 001 | CSI compression 0 | Input feature vector 0 | indoor 0 |
| | | | outdoor (uma, umi) 1 |
| | | Input original channel 1 | |
| | | | |
| | CSI prediction 1 | ... | |

(continued)

| First function | Second function | Third function | Fourth function |
|---|---|---|---|
| Beam management 002 | Beam time domain prediction | High speed | ... |
| | | Intermediate speed | |
| | | Low speed | |
| | Beam frequency domain prediction | | |
| Positioning 003 | | | |

As shown in Table 11 above, different functions pre-define different bit identifications.

FIG. 17E is another example diagram of model function interaction in the embodiments of the present application. As shown in FIG. 17E, the network device may transmit a model function identification (information query) to the terminal equipment, and the terminal equipment may feed back the model function identification (information report) to the network device. in the case of model function query, query may be performed via the multi-level function identification. The terminal equipment may report by using 0, 1, for example, 0 indicates nonsupport, and 1 indicates support.

The following text describes a process of model matching between the terminal equipment and the network device, for example, for a bilateral model.

The network side device may inform a terminal equipment in a cell of the model information supported by the network side device via a system message which may include model identification information and may be transmitted through broadcast, multicast, or unicast. For example, it may be a cell-specific message, or may be a UE-specific message.

After receiving information on supporting a model (for example, which is contained in the system message, and may be a cell-specific message or a UE-specific message) as transmitted by the network device, the terminal equipment may compare a model it received with a model it owned.

For example, the network device transmits AI/ML-related capability query to a terminal equipment. The terminal equipment reports a model message possessed by the terminal equipment according to the capability query, the model information including model identification information. The model is within a model transmitted by the network device.

Or, a terminal equipment with an AI/ML capability initiates an AI/ML capability report request to a network side. After receiving the report request, the network side device transmits AI/ML configuration information to the terminal equipment. The terminal equipment reports model information possessed by the terminal equipment according to the configuration information, the model information including model identification information. The reported model information is a subset of model information transmitted by the network device.

In some embodiments, the terminal equipment may query and report a configuration according to a model related capability of the network device, and report model information supported by the terminal equipment, which may include the model identification information or the first identification information of the model. The network device receives the model information reported by the terminal equipment, and compares a model it supported with the model it received. The network device configures finally used model information to the terminal equipment, which may be the model identification information or the second identification information.

Table 12 exemplarily shows a situation of models configured by the network device according to the report information.

Table 12

| Models possessed by the network device | Models reported by the terminal equipment | Models configured by the network device according to the report information |
|---|---|---|
| model #A | model #A | model #A |
| model #B | model #C | model #C |
| model #C | model #X | |
| model #D | | |
| model #E | | |

The following text describes configurations related to AI/ML queries.

For example, the network device transmits AI/ML model information to the terminal equipment, the model information may be transmitted to a terminal equipment in a cell corresponding to the network device via a system message, or a group of terminal equipment in the cell, or a terminal equipment in the cell. The message may be carried in a system message, RRC signaling, a MAC CE, or other downlink control information.

The AI/ML model information transmitted by the network device may indicate that the network device has a capacity to support AI/ML for a function, may further include model identification information supported by the network device for the function, and may further additionally include resource configuration information or report configuration information for which the terminal equipment is expected to report corresponding AI/ML information.

Because the information is transmitted by the network device via the system message, if a terminal equipment in a cell where the network device is located has a function of supporting AI/ML, the terminal equipment performs corresponding reporting, therefore, signaling overhead of user by user query of the network device is avoided.

After receiving the AI/ML model information, the terminal equipment transmits an AI/ML information report request at a specified uplink resource. The uplink resource may be included in the AI/ML model information transmitted by the network device, or given by other configuration messages related to the AI/ML model information, such as dedicated RRC configuration information reported by AI/ML information.

The network device configures resources reported by AI/ML information according to the report request of the terminal equipment, and/or queries corresponding AI/ML information or capability of the terminal equipment. The above capability of the model may include a model compileable capability, a model trainable capability, functions supported by the model (such as CSI feedback, beam management, positioning, mobility management, etc.), a capability for the model to support model transmission, and a capability for the model to support network side management, etc.

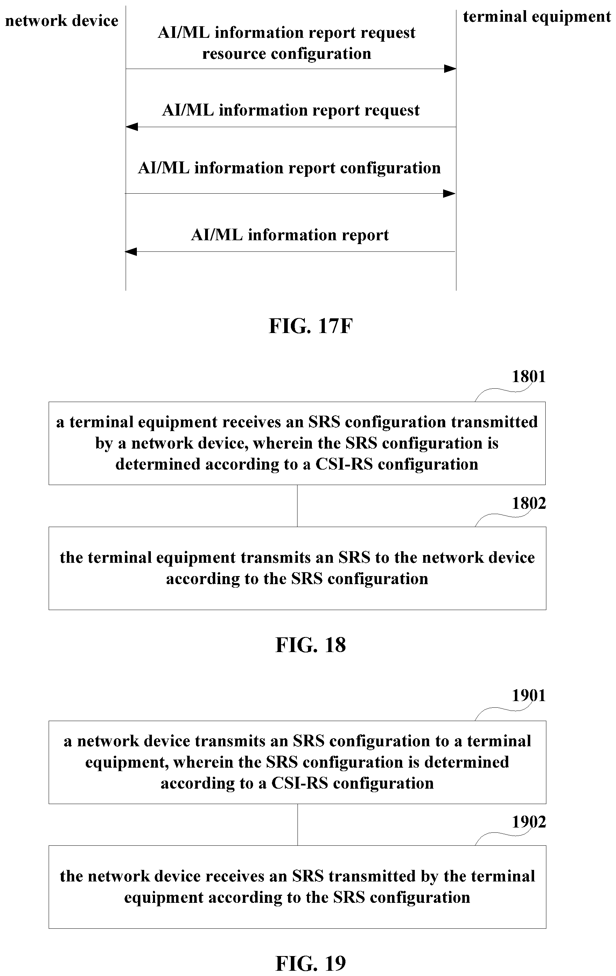

FIG. 17F is a schematic diagram of AI/ML report in the embodiments of the present application. As shown in FIG. 17F, the network device transmits AI/ML information report request resource configuration to the terminal equipment; the configuration may be transmitted via system information, or cell-level control information, such as an RRC message.

For example, one of the purposes for the network device to transmit the AI/ML-specific information report request resource configuration is to enable a terminal equipment with an AI/ML capability in a cell to actively report an AI capability and/or model information, avoiding terminal equipment query one by one, thereby overhead may be further reduced.

After receiving the AI/ML information report request resource configuration, the terminal equipment with the AI/ML capability transmits an AI/ML information report request at a corresponding resource; the resource of the report request may be a resource of a random access channel, or a resource of another uplink control channel, or a time-frequency resource of another uplink channel. The report request may be carried by a specified preamble sequence, or by dedicated UCI, or by a dedicated RRC message, or by a dedicated MAC CE.

After receiving the report request of the terminal equipment, the network device performs further AI/ML capability query on the terminal equipment and transmits AI/ML information report configuration. The capability query is associated with the content of the report request; such as association based on a function, association based on a model identification, association based on a model type, association based on a model capability, etc.

The terminal equipment may perform AL/Ml information report according to the AI/ML information report configuration. For the content of the capability query and the corresponding report of the terminal equipment, the above embodiments of relevant capability query may be referred to, details are not provided here.

The above capability of the model may include a model compileable capability, a model trainable capability, functions supported by the model (such as CSI feedback, beam management, positioning, mobility management, etc.), a capability for the model to support model transmission, and a capability for the model to support network side management, etc.

Embodiments of fourth aspect

The embodiments of the present application provide a reference signal transmission method, which is described from a terminal equipment side, the contents same as the embodiments of the first aspect are not repeated.

FIG. 18 is a schematic diagram of a reference signal transmission method in the embodiments of the present application, as shown in FIG. 18, the method includes:

1801, a terminal equipment receives a sounding reference signal (SRS) configuration transmitted by a network device, wherein the sounding reference signal (SRS) configuration is determined according to a channel state information reference signal (CSI-RS) configuration; and

1802, the terminal equipment transmits a sounding reference signal (SRS) to the network device according to the sounding reference signal (SRS) configuration.

It should be noted that the above FIG. 18 is only schematic description of the embodiments of the present application, but the present application is not limited to this. For example, an execution step of each operation may be adjusted appropriately, moreover other some operations may be increased or reduced. Persons skilled in the art may make appropriate modifications according to the above contents, not limited to the disclosure of the above FIG. 18.

In some embodiments, in the sounding reference signal (SRS) configuration, a frequency domain density of the sounding reference signal (SRS) is in consistence with a frequency domain density of a channel state information reference signal (CSI-RS), and the number of resource blocks of the sounding reference signal (SRS) is in consistence with the number of resource blocks of the channel state information reference signal (CSI-RS).

In some embodiments, in the sounding reference signal (SRS) configuration, a frequency domain density of the sounding reference signal (SRS) is greater than a frequency domain density of the channel state information reference signal (CSI-RS), and the number of resource blocks of the sounding reference signal (SRS) is in consistence with the number of resource blocks of the channel state information reference signal (CSI-RS).

In some embodiments, a sequence length of the sounding reference signal (SRS) may be a product of the number of resource blocks (RBs) occupied by the SRS and the frequency domain density of the channel state information reference signal (CSI-RS).

In some embodiments, the sequence length of the SRS is expressed as:

$$M_{\mathrm{sc},b}^{\mathrm{SRS}} = m_{\mathrm{SRS},b} \cdot \rho,$$

or

$$M_{\mathrm{sc},b}^{\mathrm{SRS}} = m_{\mathrm{SRS},b} N_{\mathrm{sc}}^{\mathrm{RB}} / K_{\mathrm{TC}}, \ K_{\mathrm{TC}} = N_{\mathrm{sc}}^{\mathrm{RB}} / \rho$$

where, $\rho$ is the frequency domain density of the CSI-RS, $M_{\mathrm{sc},b}^{\mathrm{SRS}}$ is the sequence length of the SRS, $m_{\mathrm{SRS},b}$ is the number of RBs configured for the SRS, and $N_{\mathrm{sc}}^{\mathrm{RB}}$ is the number of subcarriers in an RB.

In some embodiments, the SRS is used to obtain downlink channel estimation based on the CSI-RS by using channel reciprocity and via uplink channel estimation based on the SRS.

In some embodiments, the SRS is used in training of an AI/ML model of downlink channel state information (CSI).

Each of the above embodiments is only illustrative for the embodiments of the present application, but the present application is not limited to this, appropriate modifications may be further made based on the above each embodiment. For example, each of the above embodiments may be used individually, or one or more of the above embodiments may be combined.

As may be known from the above embodiments, a terminal equipment transmits a sounding reference signal (SRS) to a network device according to a sounding reference signal (SRS) configuration. Thereby, the network device may train AI/ML models, so as to maintain the consistency of AI/ML model running and improve the robustness of model running.

Embodiments of fifth aspect

The embodiments of the present application provide a reference signal reception method, which is described from a network device side, the contents same as the embodiments of the first to fourth aspects are not repeated.

FIG. 19 is a schematic diagram of an information processing method in the embodiments of the present application, as shown in FIG. 19, the method includes:

1901, a network device transmits a sounding reference signal (SRS) configuration to a terminal equipment, wherein the sounding reference signal (SRS) configuration is determined according to a channel state information reference signal (CSI-RS) configuration; and

1902, the network device receives a sounding reference signal (SRS) transmitted by the terminal equipment according to the sounding reference signal (SRS) configuration.

It should be noted that the above FIG. 19 is only schematic description of the embodiments of the present application, but the present application is not limited to this. For example, an execution step of each operation may be adjusted appropriately, moreover other some operations may be increased or reduced. Persons skilled in the art may make appropriate modifications according to the above contents, not limited to the disclosure of the above FIG. 19.

Each of the above embodiments is only illustrative for the embodiments of the present application, but the present application is not limited to this, appropriate modifications may be further made based on the above each embodiment. For example, each of the above embodiments may be used individually, or one or more of the above embodiments may be combined.

As may be known from the above embodiments, a network device transmits a sounding reference signal (SRS) configuration to a terminal equipment, and receives a sounding reference signal (SRS) transmitted by the terminal equipment according to the sounding reference signal (SRS) configuration. Thereby, the network device may train AI/ML models, so as to maintain the consistency of AI/ML model running and improve the robustness of model running.

Embodiments of sixth aspect

Embodiments of the present application provide an information transmission apparatus. The device for example may be a terminal equipment, or may be one or more parts or components configured in the terminal equipment. The contents same as the embodiments of the first, third and fourth aspects are not repeated.

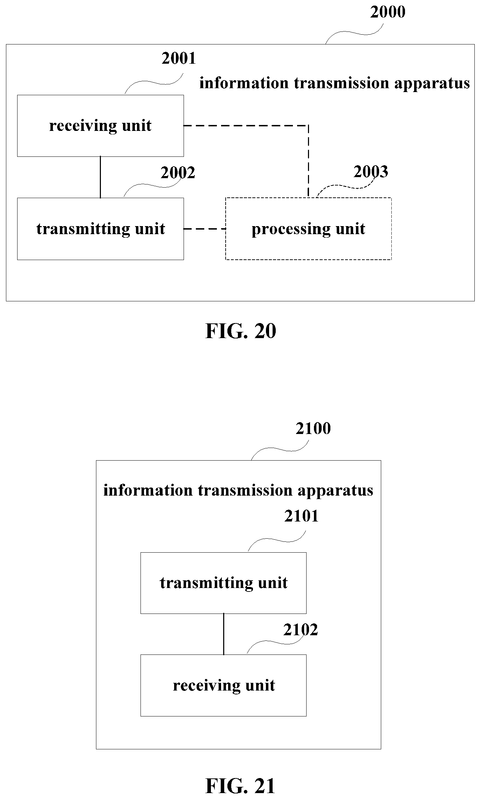

FIG. 20 is a schematic diagram of an information transmission apparatus in the embodiments of the present application. As shown in FIG. 20, an information transmission apparatus 2000 includes:

a receiving unit 2001 configured to receive a capability query request of AI/ML transmitted by a network device; and
a transmitting unit 2002 configured to feed back a capability query response or report to the network device according to the capability query request.

In some embodiments, the capability query request includes querying at least one of the following:

an AI/ML capability;
a certain signal processing function;
an AI/ML model group identification;
an AI/ML model identification;
a version identification of the AI/ML model;
an update capability of the AI/ML model;
a performance monitoring capability or performance evaluation capability of the AI/ML model;
a training capability of the AI/ML model; or
a storage capability related to update of the AI/ML model;

In some embodiments, the capability query response or report includes at least one of the following:

whether an AI/ML capability is supported;
whether a certain signal processing function is supported;
whether a queried AI/ML model group identification is supported, or, a supported AI/ML model group identification;
whether a queried AI/ML model identification is supported, or a supported AI/ML model identification;
whether a version identification of a queried AI/ML model is supported, or a version identification of a supported AI/ML model;
whether an update capability of the AI/ML model is supported;
whether a performance monitoring capability or performance evaluation capability of the AI/ML model is supported;
whether a training capability of the AI/ML model is supported; or
a storage capability related to update of the AI/ML model.

In some embodiments, the capability query request includes an AI/ML model group identification and/or a model identification and/or a version identification for a certain signal processing function supported by the network device.
As shown in FIG. 20, the information transmission apparatus 2000 further includes:
a processing unit 2003 configured to query whether there exist consistent AI/ML models in the terminal equipment according to the AI/ML model group identification and/or the model identification and/or the version identification supported by the network device, and include positive information of the model group identification and/or the model identification and/or the version identification in the capability query response or report in a case where there exist consistent AI/ML models.
In some embodiments, the capability query response or report includes updated capability information and/or an identification of the AI/ML model supported by the terminal equipment, and the receiving unit 2001 further receives update information of the AI/ML model transmitted by the network device;
wherein the update information of the AI/ML model includes a parameter or identification of the AI/ML model, and the terminal equipment selects a corresponding AI/ML model according to the parameter or identification, or downloads a corresponding AI/ML model from a core network device or the network device.
In some embodiments, the capability query response or report includes capability information on whether the terminal equipment supports training, and/or capability information on whether the terminal equipment supports performance evaluation indicated by a network.

In some embodiments, in a case where AI/ML model groups and/or models supported by the terminal equipment and the network device are consistent, the receiving unit 2001 further receives configuration information of the AI/ML model groups and/or models transmitted by the network device.

In some embodiments, the receiving unit 2001 receives configuration information of the network device for a certain signal processing function, the configuration information including an identification of the AI/ML model group and/or the model, and performs the signal processing by using the AI/ML model corresponding to the identification of the AI/ML model group and/or the model.

In some embodiments, the receiving unit 2001 receives a message for configuring or activating or enabling an AI/ML model transmitted by the network device, and uses a corresponding AI/ML model according to the message; and/or

the receiving unit 2001 receives a message for de-configuring or deactivating or disabling an AI/ML model transmitted by the network device, and stops a corresponding AI/ML model according to the message.

In some embodiments, the identification related to the AI/ML model includes at least one of the following: a signal processing function identification, a model group identification, a model identification, a model category identification, a model layer number identification, a model version identification, or a model size or storage size identification.

In some embodiments, the network device and the terminal equipment have AI/ML models with identical identifications, and the AI/ML model of the network device and the AI/ML model of the terminal equipment have been jointly trained.

In some embodiments, in a case where the terminal equipment supports update of the AI/ML model and has an available memory, the receiving unit 2001 receives indication information for transmitting the AI/ML model transmitted by the network device, and receives the AI/ML model according to the indication information;

wherein the received AI/ML model includes identification information related to the AI/ML model, an AI/ML model structure and parameter information, wherein the identification information related to the AI/ML model is transmitted via radio resource control signaling (RRC) or a MAC CE, or is transmitted via a data channel, and the AI/ML model structure and the parameter information are transmitted via a data channel;

wherein the indication information includes an AI/ML model identification and/or a version identification, and after receiving the AI/ML model, the transmitting unit 2002 transmits feedback information to the network device, the feedback information including the AI/ML model identification and/or the version identification.

In some embodiments, there exists an AI encoder for channel state information (CSI) in the terminal equipment, and there exists an AI decoder with an identification and/or a version consistent with that/those of the AI encoder in the network device, and the terminal equipment further has an AI decoder consistent with the AI decoder in the network device, and the terminal equipment performs performance monitoring and/or training via the AI encoder and the AI decoder.

In some embodiments, when a result of the performance monitoring is lower than a threshold, the transmitting unit 2002 transmits a stop request for stopping the AI encoder and the AI decoder;

the receiving unit 2001 receives a channel state information reference signal (CSI-RS) transmitted by the network device;

in a case where the capability query response or report includes capability information on that the terminal equipment supports performance monitoring, the receiving unit 2001 receives metric information and/or threshold information for the performance monitoring configured by the network device;

in a case where the capability query response or report includes capability information on that the terminal equipment supports training, the receiving unit 2001 receives parameter information for the training configured by the network device.

In some embodiments, there exists an AI encoder for channel state information (CSI) in the terminal equipment, and there exists an AI decoder with an identification and/or a version consistent with that/those of the AI encoder in the network device, and the network device further has an AI encoder consistent with the AI encoder in the terminal equipment, and the network device performs performance monitoring and/or training via the AI encoder and the AI decoder.

In some embodiments, the receiving unit 2001 receives a sounding reference signal (SRS) configuration transmitted by the network device; and the transmitting unit 2002 transmits a sounding reference signal (SRS) according to the sounding reference signal (SRS) configuration.

In some embodiments, in the sounding reference signal (SRS) configuration, a frequency domain density of the sounding reference signal (SRS) is in consistence with a frequency domain density of a channel state information reference signal (CSI-RS), and the number of resource blocks of the sounding reference signal (SRS) is in consistence with the number of resource blocks of the channel state information reference signal (CSI-RS);

or, in the sounding reference signal (SRS) configuration, a frequency domain density of the sounding reference signal (SRS) is greater than a frequency domain density of the channel state information reference signal (CSI-RS), and the number of resource blocks of the sounding reference signal (SRS) is in consistence with the number of resource blocks of the channel state information reference signal (CSI-RS).

In some embodiments, a sequence length of the sounding reference signal (SRS) is a product of the number of resource blocks (RBs) occupied by the SRS and the frequency domain density of the channel state information reference signal (CSI-RS);

wherein the sequence length of the SRS is expressed as:

$$M_{\text{sc},b}^{\text{SRS}} = m_{\text{SRS},b} \cdot \rho,$$

or

$$M_{\text{sc},b}^{\text{SRS}} = m_{\text{SRS},b} N_{\text{sc}}^{\text{RB}} / K_{\text{TC}}, \ \ K_{\text{TC}} = N_{\text{sc}}^{\text{RB}} / \rho$$

where, $\rho$ is the frequency domain density of the CSI-RS, $M_{\text{sc},b}^{\text{SRS}}$ is the sequence length of the SRS, $m_{\text{SRS},b}$ is the number of RBs configured for the SRS, and $N_{\text{sc}}^{\text{RB}}$ is the number of subcarriers in an RB.

In some embodiments, the SRS is used to obtain downlink channel estimation based on the CSI-RS by using channel reciprocity and via uplink channel estimation based on the SRS.

Each of the above embodiments is only illustrative for the embodiments of the present application, but the present application is not limited to this, appropriate modifications may be further made based on the above each embodiment. For example, each of the above embodiments may be used individually, or one or more of the above embodiments may be combined.

It's worth noting that the above only describes components or modules related to the present application, but the present application is not limited to this. The information transmission apparatus 2000 may further include other components or modules. For detailed contents of these components or modules, relevant technologies may be referred to.

Moreover, for the sake of simplicity, FIG. 20 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present application have no limitation to this.

As may be known from the above embodiments, a terminal equipment receives a capability query request of AI/ML transmitted by a network device, and the terminal equipment feeds back a capability query response or report to the network device according to the capability query request. Thereby, AI/ML model running may be monitored, consistency of the AI/ML model running may be maintained, and robustness of the model running may be improved.

Embodiments of seventh aspect

Embodiments of the present application provide an information transmission apparatus. The apparatus may, for example, be a network device, or it may be one or more parts or components configured on the network device. The contents same as the embodiments of the first to fifth aspects are not repeated.

FIG. 21 is a schematic diagram of an information transmission apparatus in the embodiments of the present application. As shown in FIG. 21, an information transmission apparatus 2100 includes:

a transmitting unit 2101 configured to transmit a capability query request of AI/ML to a terminal equipment; and
a receiving unit 2102 configured to receive a capability query response or report fed back by the terminal equipment according to the capability query request.

Each of the above embodiments is only illustrative for the embodiments of the present application, but the present application is not limited to this, appropriate modifications may be further made based on the above each embodiment. For example, each of the above embodiments may be used individually, or one or more of the above embodiments may be combined.

It's worth noting that the above only describes components or modules related to the present application, but the present application is not limited to this. The information transmission apparatus 2100 may further include other components or modules. For detailed contents of these components or modules, relevant technologies may be referred to.

Moreover, for the sake of simplicity, FIG. 21 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present application have no limitation to this.

As may be known from the above embodiments, a network device transmits a capability query request of AI/ML to a terminal equipment, and the network device receives a capability query response or report fed back by the terminal equipment according to the capability query request. Thereby, AI/ML model running may be monitored, consistency of the AI/ML model running may be maintained, and robustness of the model running may be improved.

Embodiments of eighth aspect

The embodiments of the present application further provide a communication system, FIG. 1 may be referred to, the contents same as the embodiments of the first to seventh aspects are not repeated.

In some embodiments, the communication system 100 at least may include:

a terminal equipment 102 configured to receive a capability query request of AI/ML, and feed back a capability query response or report according to the capability query request; and
a network device 101 configured to transmit the capability query request of AI/ML, and receive the capability query response or report.

The embodiments of the present application further provide a network device, for example may be a base station, but the present application is not limited to this, it may also be other network device.

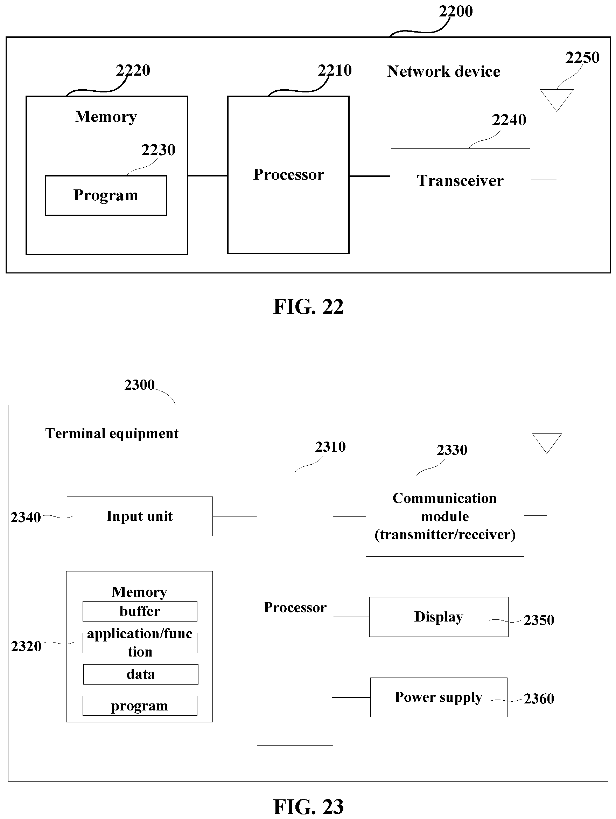

FIG. 22 is a composition schematic diagram of a network device in the embodiments of the present application. As shown in FIG. 22, the network device 2200 may include: a processor 2210 (such as a central processing unit (CPU)) and a memory 2220; the memory 2220 is coupled to the processor 2210. The memory 2220 may store various data; moreover, also stores a program 2230 for information processing, and executes the program 2230 under the control of the processor 2210.

For example, the processor 2210 can be configured to execute a program to implement the information transmission method as described in the embodiments of the second aspect. For example, the processor 2210 may be configured to perform the following control: transmit a capability query request of AI/ML to a terminal equipment, and receive a capability query response or report fed back by the terminal equipment according to the capability query request.

For another example, the processor 2210 may be configured to execute a program to implement the reference signal reception method as described in the embodiments of the fourth aspect. For example, the processor 2210 may be configured to perform the following control: transmit a sounding reference signal (SRS) configuration to a terminal equipment, wherein the sounding reference signal (SRS) configuration is determined according to a channel state information reference signal (CSI-RS) configuration; and receive a sounding reference signal (SRS) transmitted by the terminal equipment according to the sounding reference signal (SRS) configuration.

In addition, as shown in FIG. 22, the network device 2200 may further include: a transceiver 2240 and an antenna 2250, etc.; wherein the functions of said components are similar to relevant arts, which are not repeated here. It's worth noting that the network device 2200 does not have to include all the components shown in FIG. 22. Moreover, the network device 2200 may further include components not shown in FIG. 22, relevant arts may be referred to.

The embodiments of the present application further provide a terminal equipment, but the present application is not limited to this, it may also be other device.

FIG. 23 is a schematic diagram of a terminal equipment in the embodiments of the present application. As shown in FIG. 23, the terminal equipment 2300 may include a processor 2310 and a memory 2320; the memory 2320 stores data and programs, and is coupled to the processor 2310. It's worth noting that this figure is exemplary; other types of structures can also be used to supplement or replace this structure, so as to realize a telecommunication function or other functions.

For example, the processor 2310 can be configured to execute a program to implement the information transmission method as described in the embodiments of the first aspect. For example, the processor 2310 may be configured to perform the following control: receive a capability query request of AI/ML transmitted by a network device, and feed back a capability query response or report to the network device according to the capability query request.

For another example, the processor 2310 may be configured to execute a program to implement the reference signal transmission method as described in the embodiments of the third aspect. For example, the processor 2310 may be configured to perform the following control: receive a sounding reference signal (SRS) configuration transmitted by a network device, wherein the sounding reference signal (SRS) configuration is determined according to a channel state information reference signal (CSI-RS) configuration; and transmit a sounding reference signal (SRS) to the network device according to the sounding reference signal (SRS) configuration.

As shown in FIG. 23, the terminal equipment 2300 may further include: a communication module 2330, an input unit 2340, a display 2350 and a power supply 2360. The functions of said components are similar to relevant arts, which are not repeated here. It's worth noting that the terminal equipment 2300 does not have to include all the components shown in FIG. 23, said components are not indispensable. Moreover, the terminal equipment 2300 may further include components not shown in FIG. 23, relevant arts can be referred to.

The embodiments of the present application further provide a computer program, wherein when a terminal equipment executes the program, the program enables the terminal equipment to execute the information transmission method described in the embodiments of the first and third aspects or the reference signal transmission method described in the embodiments of the fourth aspect.

The embodiments of the present application further provide a storage medium in which a computer program is stored, wherein the computer program enables a terminal equipment to execute the information transmission method described in the embodiments of the first and third aspects or the reference signal transmission method described in the embodiments of the fourth aspect.

The embodiments of the present application further provide a computer program, wherein when a network device executes the program, the program enables the network device to execute the information transmission method described in the embodiments of the second aspect or the reference signal reception method described in the embodiments of the fifth aspect.

The embodiments of the present application further provide a storage medium in which a computer program is stored, wherein the computer program enables a network device to execute the information transmission method described in the embodiments of the second aspect or the reference signal reception method described in the embodiments of the fifth aspect.

The device and method in the present application may be realized by hardware, or may be realized by combining hardware with software. The present application relates to such a computer readable program, when the program is executed by a logic component, the computer readable program enables the logic component to realize the device described in the above text or a constituent component, or enables the logic component to realize various methods or steps described in the above text. The present application further relates to a storage medium storing the program, such as a hard disk, a magnetic disk, an optical disk, a DVD, a flash memory and the like.

By combining with the method/device described in the embodiments of the present application, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present application, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer devices, such as a combination of a DSP and a microprocessor, a plurality of microprocessors, one or more microprocessors combined and communicating with the DSP or any other such configuration.

The present application is described by combining with the specific implementations, however persons skilled in the art should clearly know that these descriptions are exemplary and do not limit the protection scope of the present application. Persons skilled in the art may make various variations and modifications to the present application according to the principle of the present application, these variations and modifications are also within the scope of the present application.

As for the implementations including the above embodiments, the following supplements are further disclosed:

1. An information transmission method, including:

31

a terminal equipment receives a capability query request of AI/ML transmitted by a network device; and
the terminal equipment feeds back a capability query response or report to the network device according to the capability query request.

2. The method according to Supplement 1, wherein the capability query request includes querying at least one of the following:

an AI/ML capability;
a signal processing function;
an AI/ML model group identification;
an AI/ML model identification;
a version identification of the AI/ML model;
an update capability of the AI/ML model;
a performance monitoring capability or performance evaluation capability of the AI/ML model;
a training capability of the AI/ML model; or
a storage capability related to update of the AI/ML model.

3. The method according to Supplement 1, wherein the capability query response or report includes at least one of the following:

whether an AI/ML capability is supported;
whether a certain signal processing function is supported;
whether a queried AI/ML model group identification is supported, or, a supported AI/ML model group identification;
whether a queried AI/ML model identification is supported, or a supported AI/ML model identification;
whether a version identification of a queried AI/ML model is supported, or a version identification of a supported AI/ML model;
whether an update capability of the AI/ML model is supported;
whether a performance monitoring capability or performance evaluation capability of the AI/ML model is supported;
whether a training capability of the AI/ML model is supported; or
a storage capability related to update of the AI/ML model.

4. The method according to Supplement 1, wherein the capability query request includes an AI/ML model group identification and/or a model identification and/or a version identification for a certain signal processing function supported by the network device, and the method further includes:

the terminal equipment queries whether there exist consistent AI/ML models in the terminal equipment according to the AI/ML model group identification and/or the model identification and/or the version identification supported by the network device, and
includes positive information of the model group identification and/or the model identification and/or the version identification in the capability query response or report in a case where there exist consistent AI/ML models.

5. The method according to any one of Supplements 1 to 4, wherein the capability query response or report includes updated capability information and/or an identification of the AI/ML model supported by the terminal equipment, and the method further includes:
the terminal equipment receives update information of the AI/ML model, transmitted by the network device.
6. The method according to Supplement 5, wherein the update information of the AI/ML model includes a parameter or identification of the AI/ML model, and the terminal equipment selects a corresponding AI/ML model according to the parameter or identification, or downloads a corresponding AI/ML model from a core network device or the network device.
7. The method according to any one of Supplements 1 to 6, wherein the capability query response or report includes capability information on whether the terminal equipment supports training, and/or capability information on whether the terminal equipment supports performance evaluation indicated by a network.
8. The method according to any one of Supplements 1 to 7, wherein in a case where AI/ML model groups and/or signal processing functions supported by the terminal equipment and the network device are consistent, the method further includes:
the terminal equipment receives an intra-group identification and/or a model identification of the AI/ML model group transmitted by the network device.

9. The method according to any one of Supplements 1 to 8, wherein the method further includes:

the terminal equipment receives configuration information of the network device for a certain signal processing function, the configuration information including an identification of the AI/ML model group and/or the model, and performs the signal processing by using the AI/ML model corresponding to the identification of the AI/ML model group and/or the model.

10. The method according to any one of Supplements 1 to 9, wherein the method further includes:

the terminal equipment receives a message for configuring or activating or enabling an AI/ML model transmitted by the network device; and
uses a corresponding AI/ML model according to the message.

11. The method according to any one of Supplements 1 to 9, wherein the method further includes:

the terminal equipment receives a message for de-configuring or deactivating or disabling an AI/ML model transmitted by the network device; and
stops a corresponding AI/ML model according to the message.

12. The method according to any one of Supplements 1 to 11, wherein the identification related to the AI/ML model includes at least one of the following: a signal processing function identification, a model group identification, a model identification, a model category identification, a model layer number identification, a model version identification, or a model size or storage size identification.

13. The method according to any one of Supplements 1 to 12, wherein the network device and the terminal equipment have AI/ML models with identical identifications, and the AI/ML model of the network device and the AI/ML model of the terminal equipment have been jointly trained.

14. The method according to any one of Supplements 1 to 13, wherein in a case where the terminal equipment supports update of the AI/ML model and has an available memory, the method further includes:

the terminal equipment receives indication information for transmitting the AI/ML model transmitted by the network device; and
the terminal equipment receives the AI/ML model according to the indication information.

15. The method according to Supplement 14, wherein the received AI/ML model includes identification information related to the AI/ML model, an AI/ML model structure and parameter information;
wherein the identification information related to the AI/ML model is transmitted via radio resource control signaling (RRC) or a MAC CE, or is transmitted via a data channel, and the AI/ML model structure and the parameter information are transmitted via a data channel.

16. The method according to Supplement 14, wherein the indication information includes an AI/ML model identification and/or a version identification, and the method further includes:
after receiving the AI/ML model, the terminal equipment transmits feedback information to the network device, the feedback information including the AI/ML model identification and/or the version identification.

17. The method according to any one of Supplements 1 to 16, wherein there exists an AI encoder for channel state information (CSI) in the terminal equipment, and there exists an AI decoder with an identification and/or a version consistent with that/those of the AI encoder in the network device;
the terminal equipment further has an AI decoder consistent with the AI decoder in the network device, and the terminal equipment performs performance monitoring and/or training via the AI encoder and the AI decoder.

18. The method according to Supplement 17, wherein the method further includes:
when a result of the performance monitoring is lower than a threshold, the terminal equipment transmits a stop request for stopping the AI encoder and the AI decoder.

19. The method according to Supplement 17, wherein the method further includes:
the terminal equipment receives a channel state information reference signal (CSI-RS) transmitted by the network device.

20. The method according to Supplement 17, wherein in a case where the capability query response or report includes capability information on that the terminal equipment supports performance monitoring, the method further includes:
the terminal equipment receives metric information and/or threshold information for the performance monitoring configured by the network device.

21. The method according to Supplement 17, wherein in a case where the capability query response or report includes capability information on that the terminal equipment supports training, the method further includes:
the terminal equipment receives parameter information for the training configured by the network device.

22. The method according to any one of Supplements 17 to 21, wherein the method further includes:
in a case where the terminal equipment determines that the performance of the trained AI encoder and the AI decoder reaches a threshold, the terminal equipment transmits a trained AI decoder to the network device.

23. The method according to any one of Supplements 1 to 16, wherein there exists an AI encoder for channel state information (CSI) in the terminal equipment, and there exists an AI decoder with an identification and/or a version consistent with that/those of the AI encoder in the network device; and
the network device further has an AI encoder consistent with the AI encoder in the terminal equipment, and the network device performs performance monitoring and/or training via the AI encoder and the AI decoder.

24. The method according to Supplement 23, wherein the method further includes:
when a result of the performance monitoring is lower than a threshold, the network device transmits a stop indication for stopping the AI encoder and the AI decoder.

25. The method according to Supplement 23, wherein the method further includes:
the network device receives a sounding reference signal (SRS) transmitted by the terminal equipment.

26. The method according to any one of Supplements 23 to 25, wherein the method further includes:
in a case where the network device determines that the performance of the trained AI encoder and the AI decoder reaches a threshold, the network device transmits a trained AI encoder to the terminal equipment.

27. The method according to any one of Supplements 1 to 26, wherein the method further includes:

the terminal equipment receives sounding reference signal (SRS) configuration transmitted by the network device; and
transmits a sounding reference signal (SRS) according to the sounding reference signal (SRS) configuration.

28. The method according to Supplement 27, wherein in the sounding reference signal (SRS) configuration, a frequency domain density of the sounding reference signal (SRS) is in consistence with a frequency domain density of a channel state information reference signal (CSI-RS), and the number of resource blocks of the sounding reference signal (SRS) is in consistence with the number of resource blocks of the channel state information reference signal (CSI-RS).

29. The method according to Supplement 27, wherein in the sounding reference signal (SRS) configuration, a frequency domain density of the sounding reference signal (SRS) is greater than a frequency domain density of the channel state information reference signal (CSI-RS), and the number of resource blocks of the sounding reference signal (SRS) is in consistence with the number of resource blocks of the channel state information reference signal (CSI-RS).

30. The method according to Supplement 27, wherein a sequence length of the sounding reference signal (SRS) is a product of the number of resource blocks (RBs) occupied by the SRS and the frequency domain density of the channel state information reference signal (CSI-RS).

31. The method according to Supplement 30, wherein the sequence length of the SRS is expressed as:

$$M_{\text{sc},b}^{\text{SRS}} = m_{\text{SRS},b} \cdot \rho,$$

or

$$M_{\text{sc},b}^{\text{SRS}} = m_{\text{SRS},b} N_{\text{sc}}^{\text{RB}} / K_{\text{TC}}, \ \ K_{\text{TC}} = N_{\text{sc}}^{\text{RB}} / \rho$$

where, $\rho$ is the frequency domain density of the CSI-RS, $M_{\text{sc},b}^{\text{SRS}}$ is the sequence length of the SRS, $m_{\text{SRS},b}$ is the number of RBs configured for the SRS, and $N_{\text{sc}}^{\text{RB}}$ is the number of subcarriers in an RB.

32. The method according to Supplement 27, wherein the SRS is used to obtain downlink channel estimation based on the CSI-RS by using channel reciprocity and via uplink channel estimation based on the SRS.

33. An AI release method, including:

a terminal equipment receives indication information for transmitting the AI/ML model transmitted by a network device; and

the terminal equipment receives the AI/ML model according to the indication information.

34. The method according to Supplement 33, wherein the received AI/ML model includes identification information related to the AI/ML model, an AI/ML model structure and parameter information;

wherein the identification information related to the AI/ML model is transmitted via radio resource control signaling (RRC) or a MAC CE, or is transmitted via a data channel, and the AI/ML model structure and the parameter information are transmitted via a data channel.

35. The method according to Supplement 33, wherein the indication information includes an AI/ML model identification and/or a version identification, and the method further includes:

after receiving the AI/ML model, the terminal equipment transmits feedback information to the network device, the feedback information including the AI/ML model identification and/or the version identification.

36. An AI monitoring method, wherein there exists an AI encoder for channel state information (CSI) in a terminal equipment, and there exists an AI decoder with an identification and/or a version consistent with that/those of the AI encoder in a network device; and

the terminal equipment further has an AI decoder consistent with the AI decoder in the network device, and the terminal equipment performs performance monitoring and/or training via the AI encoder and the AI decoder;
the method includes:
when a result of the performance monitoring is lower than a threshold, the terminal equipment transmits a stop request for stopping the AI encoder and the AI decoder.

37. The method according to Supplement 36, wherein the method further includes:
the terminal equipment receives a channel state information reference signal (CSI-RS) transmitted by the network device.

38. The method according to Supplement 36, wherein the method further includes:
the terminal equipment receives metric information and/or threshold information for the performance monitoring configured by the network device.

39. The method according to Supplement 36, wherein the method further includes:
the terminal equipment receives parameter information for the training configured by the network device.

40. The method according to any one of Supplements 36 to 39, wherein the method further includes:
in a case where the terminal equipment determines that the performance of the trained AI encoder and the AI decoder reaches a threshold, the terminal equipment transmits a trained AI decoder to the network device.

41. An AI monitoring method, wherein there exists an AI encoder for channel state information (CSI) in the terminal equipment, and there exists an AI decoder with an identification and/or a version consistent with that/those of the AI encoder in the network device; and

the network device further has an AI encoder consistent with the AI encoder in the terminal equipment, and the network device performs performance monitoring and/or training via the AI encoder and the AI decoder;
the method includes:
when a result of the performance monitoring is lower than a threshold, the network device transmits a stop indication for stopping the AI encoder and the AI decoder.

42. The method according to Supplement 41, wherein the method further includes:
the network device receives a sounding reference signal (SRS) transmitted by the terminal equipment.

43. The method according to Supplement 41 or 42, wherein, the method further includes:
in a case where the network device determines that the performance of the trained AI encoder and the AI decoder reaches a threshold, the network device transmits a trained AI encoder to the terminal equipment.

44. An information transmission method, including:

a network device transmits a capability query request of AI/ML to a terminal equipment; and
the network device receives a capability query response or report fed back by the terminal equipment according to the capability query request.

45. A reference signal transmission method, including:

a terminal equipment receives a sounding reference signal (SRS) configuration transmitted by a network device, wherein the sounding reference signal (SRS) configuration is determined according to a channel state information reference signal (CSI-RS) configuration; and

the terminal equipment transmits a sounding reference signal (SRS) to the network device according to the sounding reference signal (SRS) configuration.

46. The method according to Supplement 45, wherein in the sounding reference signal (SRS) configuration, a frequency domain density of the sounding reference signal (SRS) is in consistence with a frequency domain density of a channel state information reference signal (CSI-RS), and the number of resource blocks of the sounding reference signal (SRS) is in consistence with the number of resource blocks of the channel state information reference signal (CSI-RS).

47. The method according to Supplement 45, wherein in the sounding reference signal (SRS) configuration, a frequency domain density of the sounding reference signal (SRS) is greater than a frequency domain density of the channel state information reference signal (CSI-RS), and the number of resource blocks of the sounding reference signal (SRS) is in consistence with the number of resource blocks of the channel state information reference signal (CSI-RS).

48. The method according to Supplement 45, wherein a sequence length of the sounding reference signal (SRS) may be a product of the number of resource blocks (RBs) occupied by the SRS and the frequency domain density of the channel state information reference signal (CSI-RS).

49. The method according to Supplement 48, wherein the sequence length of the SRS is expressed as:

$$M_{\mathrm{sc},b}^{\mathrm{SRS}} = m_{\mathrm{SRS},b} \cdot \rho,$$

or

$$M_{\mathrm{sc},b}^{\mathrm{SRS}} = m_{\mathrm{SRS},b} N_{\mathrm{sc}}^{\mathrm{RB}} / K_{\mathrm{TC}}, \;\; K_{\mathrm{TC}} = N_{\mathrm{sc}}^{\mathrm{RB}} / \rho$$

where, $\rho$ is the frequency domain density of the CSI-RS, $M_{\mathrm{sc},b}^{\mathrm{SRS}}$ is the sequence length of the SRS, $m_{\mathrm{SRS},b}$ is the number of RBs configured for the SRS, and $N_{\mathrm{sc}}^{\mathrm{RB}}$ is the number of subcarriers in an RB.

50. The method according to Supplement 45, wherein the SRS is used to obtain downlink channel estimation based on the CSI-RS by using channel reciprocity and via uplink channel estimation based on the SRS.

51. The method according to Supplement 45, wherein the SRS is used in training of an AI/ML model of downlink channel state information (CSI).

52. A reference signal reception method, including:

a network device transmits a sounding reference signal (SRS) configuration to a terminal equipment, wherein the sounding reference signal (SRS) configuration is determined according to a channel state information reference signal (CSI-RS) configuration; and
the network device receives a sounding reference signal (SRS) transmitted by the terminal equipment according to the sounding reference signal (SRS) configuration.

53. An information transmission method, including:

a terminal equipment receives query information of AI/ML transmitted by a network device; and
the terminal equipment feeds back a query response or report to the network device according to the query information.

54. The method according to Supplement 53, wherein the method further includes:
the terminal equipment receives a report configuration for the query response or report, transmitted by the network device.

55. The method according to Supplement 53 or 54, wherein the query response or report includes at least one of the following:

information on supporting AI/ML;
information on supporting a certain signal processing function;
a supported AI/ML model group identification;

a supported AI/ML model identification;

a supported version identification of the AI/ML model;

information on supporting update of the AI/ML model;

information on supporting performance monitoring or performance evaluation of the AI/ML model;

information on supporting training of the AI/ML model;

information on a degree of collaboration between the AI/ML model and a network;

information on a degree of interaction between the AI/ML model and the network;

information on ownership indication of the AI/ML model;

information on whether a terminal side is capable of transmitting data or a data set related to the AI/ML model; or

information on storage of the AI/ML model.

56. The method according to any one of Supplements 53 to 55, wherein the terminal equipment reports information on a degree of collaboration between the terminal equipment and the network device to the network device.

57. The method according to Supplement 56, wherein the information on the degree of collaboration information is indicated via bit information.

58. The method according to Supplement 56 or 57, wherein a degree of collaboration includes a corresponding model operation or a combination of a plurality of model operations.

59. The method according to Supplement 56 or 57, wherein different degrees of collaboration correspond to at least one of the following differences: model-related processes, operations, or signaling.

60. The method according to any one of Supplements 56 to 59, wherein the degree of collaboration is indicated via collaboration level information or a collaboration level configuration ID.

61. The method according to Supplement 60, wherein a piece of collaboration level information includes information that supports model transmission, and/or, a collaboration level includes information that supports signaling interaction;

or, a collaboration level configuration ID corresponds to information that supports model transmission, and/or information that supports signaling interaction.

62. The method according to Supplement 60, wherein a piece of collaboration level information indicates at least one of the following operations: model selection, model switching, model activation, model deactivation, model fine-tuning, model training, model upgrading, transition from an AI/ML model mode to a non-AI/ML mode, or transition from a non-AI/ML mode to an AI/ML model mode;

or, wherein a collaboration level configuration ID corresponds to at least one of the following operations: model selection, model switching, model activation, model deactivation, model fine-tuning, model training, model upgrading, transition from an AI/ML model mode to a non-AI/ML mode, or transition from a non-AI/ML mode to an AI/ML model mode.

63. The method according to any one of Supplements 53 to 62, wherein the method further includes:

the terminal equipment performs corresponding control or operation on a model after receiving the query response.

64. The method according to any one of Supplements 53 to 63, wherein the method further includes:

the terminal equipment receives configuration of a model identification format, transmitted by the network device.

65. The method according to Supplement 64, wherein the model identification format includes at least one of the following fields:

a field of a model function;

an identification field of neural network related information of a model;

fields of model input and output parameters;

pre-processed and/or post-processed field(s) of the model;

a field of version information of the model;

field(s) of a model group and/or a group member;

a field of a model source;

a field of model ownership;

a field of a model operable level;

a field of upgrade information of the model;

field(s) of training and/or retraining of the model.

a field of a model collaborative level; or

a field for which the model may collect and report data.

66. The method according to Supplement 64, wherein configuration of the model identification format is carried via Radio Resource Control (RRC) signaling and/or a MAC CE and/or Downlink Control Information (DCI).

67. The method according to any one of Supplements 53 to 66, wherein the method further includes:

the terminal equipment receives identification information transmitted by the network device.

68. The method according to Supplement 67, wherein the identification information is scrambled by a UE ID.

69. The method according to Supplement 67, wherein the identification information is scrambled by a Cell ID or PCI.

70. The method according to any one of Supplements 67 to 69, wherein according to information reported by a terminal side, a network side configures a unique identification for each model reported by the terminal side.

71. The method according to Supplement 67, wherein the identification information includes at least one of the following:

identification information of a signal processing function, identification information of an AI/ML model, version information of the AI/ML model, identification information of an AI/ML model group, intra-group identification information of the AI/ML model group, type information of the AI/ML model, storage size information of the AI/ML model or the AI/ML model group.

72. The method according to Supplement 67, wherein the identification information includes at least one of the following:

a field of a model function;
an identification field of neural network related information of a model;
fields of model input and output parameters;
pre-processed and/or post-processed field(s) of the model;
a field of version information of the model;
field(s) of a model group and/or a group member;
a field of a model source;
a field of model ownership;
a field of a model operable level;
a field of upgrade information of the model;
field(s) of training and/or retraining of the model.
a field of a model collaborative level; or
a field for which the model may collect and report data.

73. The method according to Supplement 72, wherein the identification information is scrambled by a UE ID or a Cell ID or PCI.

74. The method according to any one of Supplements 65 to 73, wherein the identification information transmitted by the network device is a registered model identification or a network side model identification.

75. The method according to any one of Supplements 53 to 66, wherein the method further includes:
the terminal equipment transmits identification information to the network device.

76. The method according to Supplement 75, wherein the identification information includes at least one of the following:

identification information of a signal processing function, identification information of an AI/ML model, version information of the AI/ML model, identification information of an AI/ML model group, intra-group identification information of the AI/ML model group, type information of the AI/ML model, or storage size information of the AI/ML model or the AI/ML model group.

77. The method according to Supplement 75 or 76, wherein the identification information transmitted by the terminal equipment is a terminal side model identification.

78. The method according to any one of Supplements 75 to 77, wherein the method further includes:

the terminal equipment further receivers a bitmap and/or a subnet mask transmitted by the network device; and
the terminal equipment transmits identification information to the network device according to the bitmap and/or the subnet mask.

79. The method according to any one of Supplements 53 to 78, wherein an operable level of an AI/ML model is indicated via a configuration ID.

80. The method according to Supplement 79, wherein the operable level includes at least one of the following: model activation, model deactivation, model fallback, model switching, model selection, model rollback to enabling or activation, or model life cycle management.

81. The method according to any one of Supplements 53 to 78, wherein a collaborative level of an AI/ML model is indicated via a configuration ID.

82. The method according to Supplement 78, wherein the collaborative level includes at least one of the following: network side model upgrade, model and network side interactive training, receiving a training data set transmitted by the network side, receiving a model transmitted by the network side, model switching controlled by the network side, or whether the model may be trained online, etc.

83. An information transmission method, including:

a terminal equipment transmits model information to a network device, wherein the model information includes a first identification of a model and/or model-related information; and
the terminal equipment receivers specified information transmitted by the network device, wherein the specified information includes a second identification of the model.

84. The method according to Supplement 83, wherein the first identification of the model is a global unique identification of the model in a mobile communication network or system; the second identification is a local identification whose length is less than the first identification.

85. The method according to Supplement 83 or 84, wherein the first identification of the model is a model identification given to the model by an owner of model property rights, and/or the second identification is a model identification given by a network device corresponding to a serving cell accessed by a terminal equipment.

86. The method according to any one of Supplements 83 to 85, wherein second identification information is used for operations performed by the network device and the terminal equipment based on the second identification, the operations including model activation, deactivation, model switching, model fallback to a traditional signal processing method, and information interaction between a network device and a terminal equipment related to model monitoring.

87. The method according to any one of Supplements 83 to 86, wherein the terminal equipment successively reports first identifications of a plurality of models and/or corresponding model-related information,

the network device successively transmits second identifications of corresponding models to the terminal equipment;
or, the network device transmits the second identifications of the models supported by the network device to the terminal equipment;
or, the network device transmits a sign indicating support, and a corresponding second identification to the terminal equipment.

88. The method according to any one of Supplements 83 to 87, wherein the method further includes:
the terminal equipment receivers a model report request and/or configuration information transmitted by the network device.

89. The method according to Supplement 88, wherein the model report request and/or configuration information is included in a capability query message of the network device, and the model information is included in a capability report message of the terminal equipment.

90. An information transmission method, including:

a terminal equipment receives query information of a model transmitted by a network device; and
the terminal equipment feeds back a query response or report to the network device according to the query information.

91. The method according to Supplement 90, wherein the query information and/or the query response include(s) functional information of the model.

92. The method according to Supplement 91, wherein the functional information includes a first function or first function configuration information, and/or a second function or second function configuration information; the second function or second function configuration information is a sub-capability/sub-configuration of the first function or first function configuration information.

93. The method according to Supplement 91, wherein the functional information is configured by RRC signaling for a certain function, or a signaling structure for a function query and/or a multilevel function query response is predefined.

94. The method according to Supplement 91, wherein the functional information is transmitted via bit information corresponding to a function identification or a function indication.

95. The method according to any one of Supplements 90 to 94, wherein the method further includes:
the terminal equipment receives model information transmitted by the network device, the model information at least including a model identification or a model first identification of a model supported by the network device.

96. The method according to Supplement 95, wherein the model information is transmitted via broadcast, multicast, or unicast, or the model information is transmitted via system information, RRC information, or control information.

97. The method according to Supplement 96, wherein the method further includes:
the terminal equipment compares a received model identification or model first identification with a model identification or model first identification of its own model.

98. The method according to Supplement 97, wherein the terminal equipment, upon receiving the query information, includes in the query response the model identification or model first identification of the model in its own model that is consistent with the received model identification or model first identification.

99. The method according to Supplement 90, wherein the query response includes a model identification which includes a first identification of a model.

100. The method according to Supplement 99, wherein the method further includes:

the terminal equipment receives a model identification configured by the network device according to report information, the model identification includes a second identification of a model; wherein the network device compares a model identification included in the report information with a model identification of its own model, and generates a second identification of the model according to a comparison result.

101. The method according to Supplement 100, wherein the method further includes:

the terminal equipment receives model information transmitted by the network device; and
transmits an information report request on an uplink resource.

102. The method according to Supplement 101, wherein configuration of the uplink resource is included in the model information, or the configuration of the uplink resource is configuration information associated with the model information.

103. The method according to Supplement 101, wherein a model message transmitted by the network device further includes network-side model capability information and/or model identification information of a network-side model.

104. The method according to Supplement 101, wherein the model message transmitted by the network device is carried in a system message, RRC signaling, a MAC CE or other downlink control information, and is transmitted to a terminal equipment connected to the network device.

105. The method according to Supplement 101, wherein the network device configures a report resource according to the report request, and/or, transmits the query information to the terminal equipment.

106. An information transmission method, including:

a terminal equipment receives configuration of an information report request resource transmitted by a network device; and
the terminal equipment transmits an information report request according to the configuration.

107. The method according to Supplement 106, wherein the information report request is related to AI/ML model capability reporting possessed by the terminal equipment.

108. The method according to Supplement 106, wherein the information report request resource is a resource of a random access channel, or a resource of an uplink control channel, or a resource of an uplink data channel.

109. The method according to Supplement 106, wherein the information report request is carried via a specified sequence, or a UCI, or an RRC message, or a MAC CE.

110. The method according to Supplement 107, wherein the AI/ML model capability includes at least one of the following: a model compileable capability, a model trainable capability, a function supported by a model, or a capability of supporting network side management.

111. A network device, including a memory and a processor, the memory storing a computer program, and the processor being configured to execute the computer program to implement the method according to any one of Supplements 1 to 110.

112. A terminal equipment, including a memory and a processor, the memory storing a computer program, and the processor being configured to execute the method according to any one of Supplements 1 to 110.

**Claims**

1. An information transmission apparatus, comprising:

   a receiving unit configured to receive a capability query request of AI/ML transmitted by a network device; and
   a transmitting unit configured to feed back a capability query response or report to the network device according to the capability query request.

2. The apparatus according to claim 1, wherein the capability query request comprises querying at least one of the following:

an AI/ML capability;
a certain signal processing function;
an AI/ML model group identification;
an AI/ML model identification;
a version identification of the AI/ML model;
an update capability of the AI/ML model;
a performance monitoring capability or performance evaluation capability of the AI/ML model;
a training capability of the AI/ML model; or
a storage capability related to update of the AI/ML model;
wherein the capability query response or report includes at least one of the following:

whether an AI/ML capability is supported;
whether a certain signal processing function is supported;
whether a queried AI/ML model group identification is supported, or, a supported AI/ML model group identification;
whether a queried AI/ML model identification is supported, or a supported AI/ML model identification;
whether a version identification of a queried AI/ML model is supported, or a version identification of a supported AI/ML model;
whether an update capability of the AI/ML model is supported;
whether a performance monitoring capability or performance evaluation capability of the AI/ML model is supported;
whether a training capability of the AI/ML model is supported; or
a storage capability related to update of the AI/ML model.

3. The apparatus according to claim 1, wherein the capability query request includes an AI/ML model group identification and/or a model identification and/or a version identification for a certain signal processing function supported by the network device, and the apparatus further comprises:
a processing unit configured to query whether there exist consistent AI/ML models in a terminal equipment according to the AI/ML model group identification and/or the model identification and/or the version identification supported by the network device, and include positive information of the model group identification and/or the model identification and/or the version identification in the capability query response or report in a case where there exist consistent AI/ML models.

4. The apparatus according to claim 1, wherein the capability query response or report includes updated capability information and/or an identification of the AI/ML model supported by the terminal equipment, and the receiving unit further receives update information of the AI/ML model transmitted by the network device;
wherein the update information of the AI/ML model includes a parameter or identification of the AI/ML model, and the terminal equipment selects a corresponding AI/ML model according to the parameter or identification, or downloads a corresponding AI/ML model from a core network device or the network device.

5. The apparatus according to claim 1, wherein the capability query response or report includes capability information on whether the terminal equipment supports training, and/or capability information on whether the terminal equipment supports performance evaluation indicated by a network.

6. The apparatus according to claim 1, wherein in a case where AI/ML model groups and/or signal processing functions supported by the terminal equipment and the network device are consistent, the receiving unit further receives an intra-group identification and/or a model identification of the AI/ML model group transmitted by the network device.

7. The apparatus according to claim 1, wherein the receiving unit receives configuration information of the network device for a certain signal processing function, the configuration information including an identification of the AI/ML model group and/or the model, and performs the signal processing by using the AI/ML model corresponding to the identification of the AI/ML model group and/or the model.

8. The apparatus according to claim 1, wherein the receiving unit receives a message for configuring or activating or enabling an AI/ML model transmitted by the network device, and uses a corresponding AI/ML model according to the message;
and/or
the receiving unit receives a message for de-configuring or deactivating or disabling an AI/ML model transmitted by the network device, and stops a corresponding AI/ML model according to the message.

9. The apparatus according to claim 1, wherein the identification related to the AI/ML model includes at least one of the following: a signal processing function identification, a model group identification, a model identification, a model category identification, a model layer number identification, a model version identification, or a model size or storage size identification.

10. The apparatus according to claim 1, wherein the network device and the terminal equipment have AI/ML models with identical identifications, and the AI/ML model of the network device and the AI/ML model of the terminal equipment have been jointly trained.

11. The apparatus according to claim 1, wherein in a case where the terminal equipment supports update of the AI/ML model and has an available memory, the receiving unit receives indication information for transmitting the AI/ML model transmitted by the network device, and receives the AI/ML model according to the indication information;

   wherein the received AI/ML model includes identification information related to the AI/ML model, an AI/ML model structure and parameter information, wherein the identification information related to the AI/ML model is transmitted via radio resource control signaling or an MAC CE, or is transmitted via a data channel, and the AI/ML model structure and the parameter information are transmitted via a data channel;
   wherein the indication information includes an AI/ML model identification and/or a version identification, and after receiving the AI/ML model, the transmitting unit transmits feedback information to the network device, the feedback information including the AI/ML model identification and/or the version identification.

12. The apparatus according to claim 1, wherein there exists an AI encoder for channel state information in the terminal equipment, and there exists an AI decoder with an identification and/or a version consistent with that/those of the AI encoder in the network device, and the terminal equipment further has an AI decoder consistent with the AI decoder in the network device, and the terminal equipment performs performance monitoring and/or training via the AI encoder and the AI decoder.

13. The apparatus according to claim 12, wherein when a result of the performance monitoring is lower than a threshold, the transmitting unit transmits a stop request for stopping the AI encoder and the AI decoder;

   the receiving unit receives a channel state information reference signal transmitted by the network device;
   in a case where the capability query response or report includes capability information on that the terminal equipment supports performance monitoring, the receiving unit receives metric information and/or threshold information for the performance monitoring configured by the network device; and
   in a case where the capability query response or report includes capability information on that the terminal equipment supports training, the receiving unit receives parameter information for the training configured by the network device.

14. The apparatus according to claim 1, wherein there exists an AI encoder for channel state information in the terminal equipment, and there exists an AI decoder with an identification and/or a version consistent with that/those of the AI encoder in the network device, and the network device further has an AI encoder consistent with the AI encoder in the terminal equipment, and the network device performs performance monitoring and/or training via the AI encoder and the AI decoder.

15. The apparatus according to claim 1, wherein

   the receiving unit receives sounding reference signal configuration transmitted by the network device; and
   the transmitting unit transmits a sounding reference signal according to the sounding reference signal configuration.

16. The apparatus according to claim 15, wherein in the sounding reference signal configuration, a frequency domain density of the sounding reference signal is in consistence with a frequency domain density of a channel state information reference signal, and the number of resource blocks of the sounding reference signal is in consistence with the number of resource blocks of the channel state information reference signal;
   or, in the sounding reference signal configuration, a frequency domain density of the sounding reference signal is greater than a frequency domain density of the channel state information reference signal, and the number of resource blocks of the sounding reference signal is in consistence with the number of resource blocks of the channel state information reference signal.

17. The apparatus according to claim 16, wherein a sequence length of the sounding reference signal is a product of the number of resource blocks occupied by the sounding reference signal and the frequency domain density of the channel state information reference signal;

wherein the sequence length of the sounding reference signal is expressed as:

$$M_{\text{sc},b}^{\text{SRS}} = m_{\text{SRS},b} \cdot \rho,$$

or

$$M_{\text{sc},b}^{\text{SRS}} = m_{\text{SRS},b} N_{\text{sc}}^{\text{RB}}/K_{\text{TC}}, \ \ K_{\text{TC}} = N_{\text{sc}}^{\text{RB}}/\rho$$

where, $\rho$ is the frequency domain density of the channel state information reference signal, $M_{\text{sc},b}^{\text{SRS}}$ is the sequence length of the sounding reference signal, $m_{\text{SRS},b}$ is the number of resource blocks configured for the sounding reference signal, and $N_{\text{sc}}^{\text{RB}}$ is the number of subcarriers in a resource block.

18. The apparatus according to claim 15, wherein the sounded reference signal is used to obtain downlink channel estimation based on the channel state information reference signal by using channel reciprocity and via uplink channel estimation based on the sounding reference signal.

19. An information transmission apparatus, comprising:

a transmitting unit configured to transmit a capability query request of AI/ML to a terminal equipment; and
a receiving unit configured to receive a capability query response or report fed back by the terminal equipment according to the capability query request.

20. A communication system, comprising:

a terminal equipment configured to receive a capability query request of AI/ML, and feed back a capability query response or report according to the capability query request; and
a network device configured to transmit the capability query request of AI/ML, and receive the capability query response or report.

**FIG. 1**

a terminal equipment receives a capability query request of AI/ML transmitted by a network device

the terminal equipment feeds back a capability query response or report to the network device according to the capability query request

**FIG. 2**

network device

a query of an AI receiving model capability and/or storage capability

response

AI encoder model or model parameters

a confirmation of model reception

Terminal equipment

**FIG. 3**

network
device

terminal
equipment

core network or
upper layer

a query of an AI receiving model
capability and/or storage capability

response

an AI encoder identification or an
encoder group identification

download request
（an AI encoder identification or
an encoder group identification）

an AI encoder/an encoder group

AI updating completion
confirmation

**FIG. 4**

terminal equipment

codebook
or PMI

non-AI module

switch

channel
parameter
（CSI-RS）

Compressed
CSI

AI encoder

AI decoder

loss
function

**FIG. 5**

**FIG. 6**

**FIG. 7**

FIG. 8

FIG. 9

**FIG. 10**

SRS of Comb-2                    new SRS pattern

**FIG. 11**

**FIG. 12**

**FIG. 13**

network device | terminal equipment

AI encoder/decoder model identifier pairing

AI encoder decoder training capacity query

response

encoder/decoder joint monitoring

model stop indication

encoder/decoder joint training

model updating completion

AI decoder (model identification, version information)

**FIG. 14**

1501

a network device transmits a capability query request of AI/ML to a terminal equipment

1502

the network device receives a capability query response or report fed back by the terminal equipment according to the capability query request

**FIG. 15**

network device | terminal equipment

model identification content and
format configuration

model identification

## FIG. 16

network device | AI/ML model information query | terminal equipment

AI/ML information report configuration

model information report

model identification format configuration

model identification

terminal model identification confirmation

## FIG. 17A

network device | AI/ML model information query | terminal equipment

AI/ML information report configuration

information on a degree of model collaboration report

model identification

**FIG. 17B**

network device | | terminal equipment

first identification of a model

second identification of the model

**FIG. 17C**

network device | terminal equipment

model function multilevel query →

model function multilevel report ←

**FIG. 17D**

network device | terminal equipment

model function identification/information
query →

model function identification/information
report ←

**FIG. 17E**

network device | AI/ML information report request resource configuration | terminal equipment

AI/ML information report request

AI/ML information report configuration

AI/ML information report

**FIG. 17F**

1801

a terminal equipment receives an SRS configuration transmitted by a network device, wherein the SRS configuration is determined according to a CSI-RS configuration

1802

the terminal equipment transmits an SRS to the network device according to the SRS configuration

**FIG. 18**

1901

a network device transmits an SRS configuration to a terminal equipment, wherein the SRS configuration is determined according to a CSI-RS configuration

1902

the network device receives an SRS transmitted by the terminal equipment according to the SRS configuration

**FIG. 19**

2000

information transmission apparatus

2001

receiving unit

2002

transmitting unit

2003

processing unit

**FIG. 20**

2100

information transmission apparatus

2101

transmitting unit

2102

receiving unit

**FIG. 21**

2200

2220                    2210        Network device        2250

Memory                              Processor              2240

2230

Program                                                Transceiver

**FIG. 22**

2300

Terminal equipment

2310                    2330

2340    Input unit                          Communication
module
(transmitter/receiver)

Memory
buffer
2320    application/func
tion                    Processor        Display        2350
data
program                                    Power supply    2360

**FIG. 23**

<div align="center">**INTERNATIONAL SEARCH REPORT**</div>

| International application No. |
|---|
| **PCT/CN2023/076735** |

**A.      CLASSIFICATION OF SUBJECT MATTER**

H04W8/24(2009.01)i;H04W72/04(2023.01)i

According to International Patent Classification (IPC) or to both national classification and IPC

**B.      FIELDS SEARCHED**

Minimum documentation searched (classification system followed by classification symbols)

IPC:  H04W H04Q7 H04L H04B

Documentation searched other than minimum documentation to the extent that such documents are included in the fields searched

Electronic data base consulted during the international search (name of data base and, where practicable, search terms used)

CNTXT; ENTXTC; VEN; WOTXT; 3GPP: AI ML 模型 训练 能力 人工智能 查询 请求 反馈 上传 响应 model train capacity request feedback response search

**C.      DOCUMENTS CONSIDERED TO BE RELEVANT**

| Category* | Citation of document, with indication, where appropriate, of the relevant passages | Relevant to claim No. |
|---|---|---|
| X | WO 2021142609 A1 (GUANGDONG OPPO MOBILE TELECOMMUNICATIONS CORP., LTD.) 22 July 2021 (2021-07-22) <br> claims 1-40, and description, page 6, line 16 to page 27, line 13 | 1-20 |
| X | WO 2021243619 A1 (BEIJING XIAOMI MOBILE SOFTWARE CO., LTD.) 09 December 2021 (2021-12-09) <br> claims 1-32, and description, page 6, line 17 to page 27, line 13 | 1-20 |
| A | US 2022012645 A1 (YING, Dawei et al.) 13 January 2022 (2022-01-13) <br> entire document | 1-20 |
| A | WO 2021244334 A1 (HUAWEI TECHNOLOGIES CO., LTD.) 09 December 2021 (2021-12-09) <br> entire document | 1-20 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 May 2023** | **18 May 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/076735**

| Patent document cited in search report | | | Publication date (day/month/year) | Patent family member(s) | | | Publication date (day/month/year) |
|---|---|---|---|---|---|---|---|
| WO | 2021142609 | A1 | 22 July 2021 | EP | 4087343 | A1 | 09 November 2022 |
| | | | | US | 2022342713 | A1 | 27 October 2022 |
| | | | | CN | 114930945 | A | 19 August 2022 |
| WO | 2021243619 | A1 | 09 December 2021 | CN | 111819872 | A | 23 October 2020 |
| US | 2022012645 | A1 | 13 January 2022 | None | | | |
| WO | 2021244334 | A1 | 09 December 2021 | EP | 4152797 | A1 | 22 March 2023 |
| | | | | US | 2023087821 | A1 | 23 March 2023 |
| | | | | CN | 113747462 | A | 03 December 2021 |

Form PCT/ISA/210 (patent family annex) (July 2022)